# EUROPEAN PATENT SPECIFICATION

(11) **EP 4 042 842 B1**
(45) Date of publication and mention of the grant of the patent: **22.07.2026**
(21) Application number: 20874974.7
(22) Date of filing: 09.10.2020
(51) Int. Cl.: H05H 1/46, H05H 1/30

(54) **METHOD OF PRODUCING NANOPARTICLES**
VERFAHREN ZUR HERSTELLUNG VON NANOTEILCHEN
PROCÉDÉ DE PRODUCTION DE NANOPARTICULES

(30) Priority: 09.10.2019 US 201962913001 P; 09.10.2019 US 201962913009 P; 09.10.2019 US 201962913025 P; 08.11.2019 US 201962932544 P; 08.11.2019 US 201962932557 P; 08.11.2019 US 201962932562 P; 17.09.2020 US 202063079820 P
(43) Date of publication of application: 17.08.2022
(73) Proprietor: Tekna Plasma Systems Inc., Sherbrooke, Quebec J1L 2T9 (CA)
(72) Inventor: GUO, Jiayin, Sherbrooke, Québec J1K 0A3 (CA); CAUCHY, Xavier, Magog, Québec J1X 7S4 (CA)
(74) Representative: Lavoix
(86) International application number: PCT/CA2020/051365
(87) International publication number: WO 2021/068084

(56) References cited:
- CA-A1- 2 581 806
- JP-A- 2002 336 688
- US-A1- 2008 268 246
- US-A1- 2011 186 419
- US-A1- 2016 030 910

## Description

### CROSS-REFERENCE TO RELATED APPLICATIONS

The present application claims the benefit of U.S. provisional patent applications serial number 63/079,820 filed on September 17, 2020; 62/913,009 filed on October 9, 2019; 62/913,001 filed on October 9, 2019; 62/913,025 filed on October 9, 2019; 62/932,544 filed on November 8, 2019; 62/932,557 filed on November 8, 2019; and 62/932,562 filed on November 8, 2019.

### TECHNICAL FIELD

This disclosure generally relates to the field of nanosize powder advanced materials that can be used in energy-related applications.

### BACKGROUND

US2011186419A1 relates to an apparatus for synthesizing nano particles. The apparatus for synthesizing nano particles is configured to include: a plasma generator that generates plasma; a recovery device that recovers the synthesized nano particles; and a cooler that is disposed between the plasma generator and the recovery device and includes a cooling path where the nano particles are synthesized, while material supplied from the plasma generator is cooled, wherein the cooling path is set to have lower cooling temperatures for each section as going to the moving direction of the nano particles.

Silicon-containing advanced nanosize powder materials have been proposed as a solution to several energy-related applications such as photovoltaics, battery technology and thermoelectrics. In lithium-ion battery applications, silicon-containing advanced powder materials have been proposed as an alternative to state-of-the-art material graphite due to the high lithium storage capacity of silicon (about 10-fold increase by weight compared to graphite), enabling the development of high-capacity anodes. However, a dramatic volume expansion and contraction during lithium storage and release causes bulk silicon to rapidly degrade. It is believed that these variations induce a loss of electronically conductive network contact with the electrode material and/or breaking of electrode material particles. As a result, the battery capacity decreases, resulting in a shorter life span. Nanosized silicon-containing advanced powder materials improves the cycle performance of the resulting anode by helping control changes in volume and stresses, e.g., when the nanosize particles have less than 300 nanometers in average particle size.

Despite the advantageous properties obtained when using nanosized silicon-containing advanced powder materials, the manufacture of high-purity nanosize silicon-containing advanced powder materials for such applications remains costly, inefficient and not scalable.

### SUMMARY

This Summary is provided to introduce a selection of concepts in a simplified form that are further described below in the Detailed Description. This Summary is not intended to identify key aspects or essential aspects of the claimed subject matter.

The present disclosure describes processes and apparatuses for manufacturing advanced nanosize powder materials that address at least some of the known issues of scalability, continuity, and quality inherent in prior art processes and apparatuses. Also described are nanosized powders with advantageous chemical and/or physical properties that can be used in various applications. The present invention is however limited to the methods defined in the appended claims.

As broadly described herein, the present disclosure relates to nanoparticles, the nanoparticles having a particle size distribution of from 20 nm to 150 nm, with < 10 ppm by number of particles having a size which is > 1000 nm.

As broadly described herein, the present disclosure relates to nanoparticles having a substantially uniform doping agent content along a radial distribution of the nanoparticles.

As broadly described herein, the present disclosure relates to nanoparticles having a core, the nanoparticles having a silicon alloy in the core, the alloy being of silicon and an element, the element having a substantially uniform radial distribution in the core.

As broadly described herein, the present disclosure relates to nanoparticles of a silicon alloy the alloy being of silicon and an element, the element having a substantially uniform radial distribution in the core.

The nanoparticles described above may further include one or more of the following features:
- having a particle size distribution of from 20 nm to 150 nm, with < 10 ppm by number of particles having a size which is > 1000 nm.
- having < 0.5 ppm by number of particles having a size which is > 1000 nm.
- having an average particle size D50 by number ≤ 100 nm and an average particle size D50 by volume ≤ 300 nm.
- having an average particle size D90 by volume ≤ 700 nm, preferably ≤ 600 nm.
- having an average particle size D95 by volume < 1000 nm, preferably < 700 nm.
- having an average particle size D10 by number ≤ 60 nm, preferably ≤ 40 nm.
- having an average particle size D50 by number ≤ 100 nm.
- having an average particle size D90 ≤ 200 nm by number.
- having < 1.5% by number and < 30% by volume/weight of particles having an average particle size > 300 nm.
- being free from particles having an average particle size > 10 µm.
- the core comprises silicon, germanium, gallium, or SiGe_{y} wherein y is from 0 to 1.
- the silicon has a purity of at least 99.95%.
- the core comprises monocrystalline silicon or polycrystalline silicon.
- the core comprises n-doped or p-doped silicon.
- the core comprises a SiNₓ alloy and the passivation layer is a nitride layer, wherein x is from 0 to 1.
- the nanoparticles have a substantially uniform nitrogen content throughout the core forming a nearly stoichiometric SiNₓ alloy.
- the nitride layer has a thickness of from about 0.06 to about 2.0 nm, preferably < 0.5 nm.
- being free of SiOₓ and SiOH surface species, wherein x is from 0 to 1.
- the passivation layer is an oxide layer or a nitride layer.
- the oxide layer has a thickness of from about 0.3 nm to about 1.0 nm.
- the nitride layer has a thickness of from about 0.06 to about 2.0 nm, preferably < 0.5 nm.
- having < 1000 ppm of carbon.
- having < 1500 ppm of nitrogen.

The present invention provides a method according to claim 1. The dependent claims set out particular embodiments of the invention.

All features of exemplary embodiments that are described in this disclosure and are not mutually exclusive can be combined with one another without departing from the scope of the invention as defined by the appended claims. Elements of one embodiment can be utilized in the other embodiments without further mention without departing from the scope of the invention as defined by the appedend claims. Other aspects and features of the present invention will become apparent to those ordinarily skilled in the art upon review of the following description of specific embodiments in conjunction with the accompanying drawings.

### BRIEF DESCRIPTION OF THE DRAWINGS

A detailed description of specific exemplary embodiments is provided herein below with reference to the accompanying drawings in which:
Fig. 1 shows a cross-sectional view of an apparatus for manufacturing nanosize powders.
Fig. 2A shows a cross-sectional view of a plasma generating device for use with the apparatus of Fig. 1.
Fig. 3 shows a cross-sectional view of an upper portion of the apparatus of Fig. 1, including a plasma generating device, a reaction chamber and a portion of a cooling chamber.
Fig. 4 shows different crystalline structures of nanosize particles.
Figs. 5-6 each show ross-sectional views of an outlet of an injector for injecting a precursor material into the apparatus of Fig. 1.
Figs. 7A and 7B show cross-sectional views of embodiments of a reaction chamber including a hot wall region of the apparatus of Fig. 1.
Fig. 8 shows a cross-sectional view of a cooling zone of a cooling chamber for use with the apparatus of Fig. 1.
Fig. 9 shows an illustration of an assembly implementation including the apparatus of Fig. 1.
Fig. 10 shows a graph of the effect of dynamic hot wall gas temperatures (in K) on conversion rate of silane (in %).
Fig. 11 shows a graph of the effect of injector sheath gas flow (in liters per minute) on conversion rate of silane (in %).
Fig. 12 shows a graph of the effect of injector sheath gap (in mm) on conversion rate of silane (in %).
Fig. 13 shows a graph of the effect of injector type on conversion rate of silane (in %).
Fig. 14A illustrates an XRD peak graphic of a first powder (BET=12.14 m²/g) (d_{P}=212 nm) (O%=0.20) (C%=0.066) (N%=1.200) (H%=0.020).
Fig. 14B shows a scanning electronic micrograph (SEM) image of the powder of Fig. 14A.
Fig. 15A illustrates an XRD peak graphic of a second powder (BET=23.25 m²/g) (d_{P}=111 nm) (O%=1.20) (C%=0.030) (N%=0.550) (H%=0.020).
Fig. 15B shows an SEM image of the powder of Fig. 15A.
Fig. 16A illustrates an XRD peak graphic of a third powder (BET=49.4 m²/g) (d_{P}=52 nm) (O%=2.10) (C%=0.029) (N%=0.360) (H%=0.038).
Fig. 16B shows a SEM image of the powder of Fig. 16A.
Figs. 17A, 17B and 17C each show an SEM image of a silicon powder made from silane as precursor material.
Figs. 18A and 18B each show a SEM image of a silicon powder (BET=32.38 m²/g) (d_{P} =80 nm) (O%=1.35) (N%=4.00) made with a prior art plasma torch process using micron size silicon precursor material;
Fig. 19 shows a graph of a particle size distribution (PSD) (size classes in µm) by volume density (%) of the powder of Figs. 18A and 18B;
Fig. 20 shows a graph of a PSD (size classes in µm) by number density (%) of the powder of Figs. 18A and 18B.
Figs. 21A and 21B each show an SEM image of a silicon powder (BET=31.04 m²/g) (d_{P}= 83 nm) (O%=1.80) (N%=0.75) made from silane as precursor material.
Fig. 22 shows a graph of a particle size distribution (PSD) (size classes in µm) by volume density (%) of the powder of Figs. 21A and 21B.
Fig. 23 shows a graph of a PSD (size classes in µm) by number density (%) of the powder of Figs. 21A and 22B.
Fig. 24 illustrates comparative charge capacity behavior of a lithium rechargeable cell including Si nanoparticle powder in the anode material having a narrow particle size distributions (PSD) compared to a wide PSD.
Fig. 25 illustrates comparative charge capacity behavior of a lithium rechargeable cell including Si nanoparticle powder in the anode material, compared to Si micron size powder, compared to graphite.
Fig. 26 illustrates comparative charge capacity behavior of a lithium rechargeable cell including SiNₓ composite nanoparticle powder in the anode material, compared to Si micron size powder having a large PSD.
Fig. 27 illustrates the effect of silane concentration on mean particle size.

In the drawings, embodiments are illustrated by way of example. It is to be expressly understood that the description and drawings are only for purposes of illustration and as an aid to understanding and are not intended to be a definition of the limits of the disclosure.

### DETAILED DESCRIPTION

A detailed description of one or more embodiments of the invention is provided below along with accompanying figures that illustrate the principles of the invention. The invention is described in connection with such embodiments, but the invention is not limited to any embodiment. The scope of the invention is limited only by the claims. Numerous specific details are set forth in the following description in order to provide a thorough understanding of the invention. These details are provided for the purpose of non-limiting examples and the invention may be practiced according to the claims without some or all of these specific details. For the purpose of clarity, technical material that is known in the technical fields related to the invention has not been described in detail so that the invention is not unnecessarily obscured.

The present disclosure describes processes and apparatuses for manufacturing advanced nanosize powder materials that address at least some of the known issues of scalability, continuity, and quality inherent in prior art processes and apparatuses. Also described are nanosized powders with advantageous chemical and/or physical properties that can be used in various applications.

### Nanosize Powder Characteristics

The nanosize powders (also referred herein as "nanoparticles" or "nanopowders") of the present disclosure, which are not part of the invention, have noticeable surprising and unexpected differences compared to powders produced using prior art vaporization processes that make use of micron size precursor materials (e.g., WO 2018/157256, CA 3,024,473 and US 7,572,315). For example, the nanoparticle powders described herein have more uniform particle sizes and narrower particle size distribution (PSD), while the powders produced using such prior art vaporization processes have much wider PSD with significant portions of large and extra-large micron particles, which is undesirable in a number of applications. The described nanoparticle powders also have a better control / tuning of doping compared to powders produced using prior art vaporization processes. Such control / tuning of doping can allow more flexibility in terms of desired characteristics for the powders in several applications.

In some embodiments, the nanoparticle powders have spherical or near spherical appearance, the powders can be discrete or partially aggregated to various extents, which is essentially dependant on the operating conditions used during the production thereof. The nanoparticle powders can be subjected to surface modification such as oxidation, nitridation, or carburization.

In some embodiments, the PSD can be achieved without the need of implementing a classification step after the plasma processing. Such PSD is, contrary to what is obtained with known processes in the art, tightly controlled such that, for example, the particles have sizes that are skewed towards smaller sizes instead of having sizes skewed towards coarser sizes. There are technical benefits in obtaining such smaller sizes (as discussed elsewhere in this text) as well as economic benefits: when the nanoparticle powders coming out of the manufacturing process have less coarse sizes, there is less wasted material (material that would not make the cut-off classification values) and as such, yields are increased. The powders can have an average PSD where at least 80% of the particles have a size < 150 nm, e.g., at least 85%, 90%, 95%, or 99% of the particles have a size < 150 nm.

The nanoparticle powders can include one or more of the following particle size features: PSD within the range of 20 nm to 350 nm, 20 nm to 300 nm, or 20 nm to 200 nm, or 20 nm to 150 mm, or any range therein; D90 ≤ 200 nm, D90 ≤ 150 nm, or D90 ≤ 130 nm; median size (D50) of ≤ 120 nm, median size (D50) of ≤ 100 nm, median size (D50) of ≤ 80 nm, or median size (D50) of ≤ 50 nm; D50 (by number) between 30 nm and 120 nm, or between 40 nm and 100 nm, or between 50 nm and 80 nm, or about 60 nm; particles having a size > 350 nm representing less than 100 ppm, less than 10 ppm, less than 1 ppm, or less than 0.5 ppm; D99 ≤ 250 nm, or D99 ≤ 230 nm; less than 100 ppm of agglomerated particles, less than 50 ppm of agglomerated particles, less than 25 ppm of agglomerated particles, less than 10 ppm of agglomerated particles, less than 1 ppm of agglomerated particles, or in some embodiments, no detectable agglomerated particles.

Particle size features of a composition in particulate form can be determined using techniques known in the art, such as, but not limited to, laser diffraction spectroscopy, transmission electron microscopy, scanning electron microscopy (SEM), and the like. The SEM image is an image of a predetermined area of the composition being analyzed, which will vary depending on at least the D50 of the composition to ensure accuracy and/or statistical significance. For example, a D50 of 120 nm can require a 5 µm per 5 µm area, whereas a D50 of 80 nm can require a 3 µm per 3 µm area and a D50 of 50 nm can require a 2 µm per 2 µm area of the composition. The powders disclosed herein can include features including less than 3 particles having a size > 1 µm as determined from an SEM image of 5000x of the composition, less than 2 particles having a size > 1 µm as determined from a SEM image of 5000x of the composition, or 1 or no detectable particles having a size > 1 µm as determined from a SEM image of 5000x of the composition; less than 3 particles having a size > 650 nm in an SEM image of 5000x of the composition, less than 2 particles having a size > 1 µm as determined from a SEM image of 5000x of the composition, 1 or no detectable particle having a size > 1 µm as determined from a SEM image of 5000x of the composition; less than 3 particles having a size > 350 nm in an SEM image of 5000x of the composition, less than 2 particles having a size > 1 µm as determined from a SEM image of 5000x of the composition, or 1 or no detectable particle having a size > 1 µm as determined from a SEM image of 5000x of the composition.

In some embodiments, the nanoparticle powders can incorporate a doping element in a more controlled manner relative to powders produced using prior art vaporization processes. For example, nanoparticle powders can have a doping agent content that is more flexible and a thickness of the passivation layer that is more consistent since dispersion of the doping agent can also be more homogeneous. The ability to better control the doping of the nanoparticle powders offers more flexibility for tuning the other properties of the nanoparticle powder for specific applications.

In some embodiments, the nanoparticle powders can incorporate no more than 4% of doping agent, e.g., no more than 3%, no more than 1.5%, or no more than 0.75%. Examples of doping agent are further discussed elsewhere in this text.

### Apparatus and Process for Manufacturing Nanosize Powders

The nanosize powders described herein can be manufactured using a process that vaporizes and / or reacts precursor materials in fluid form to obtain a reactant gas mixture. Described is a process and apparatus that allows control of the temperature and residence time of the precursor materials in the reaction zone so as to sufficiently vaporize and /or react the precursors to form the desired chemical composition in the resulting nanosize powder. Also described are methods of controlling the cooling rate of the reactant gas mixture to obtain the herein described nanosized powders having the desired particle size features.

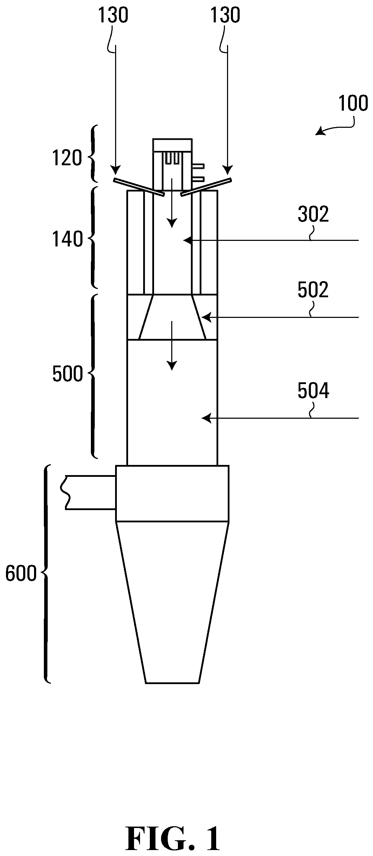

Figs. 1 to 3 show a detailed, front elevation view of an apparatus 100, not being part of the present invention, for producing powder nanosize particles by vaporization and / or reaction of a precursor material 130 (sometimes referred-to as "feedstock" or "core precursor"). The apparatus 100 includes a plasma-generating device 120 producing plasma 112, a reaction chamber 140 and a cooling chamber 500 (which defines a "quenching zone" or "quench section"). The apparatus 100 can further include a powder collector 600. The apparatus 100 includes other components such as casings, flanges, bolts, and the like, which are believed to be self-explanatory and are not described further herein.

The plasma-generating device 120 shown in Figs. 1 to 3 is an inductively coupled plasma (ICP) torch, and more specifically a radiofrequency (RF) inductively coupled plasma torch. Examples of ICP torches include those commercialized by TEKNA Plasma Systems, Inc., such as PL-50, PN-50, PL-35, PN-35, PL-70, PN-70, or PN-100. In some embodiments, the plasma-generating device 120 can be another kind of plasma torch, such as a direct current (DC) plasma torch (e.g., those commercialized by Praxair, Oerlikon-Metco, Pyrogenesis and Northwest Mettech), for example.

The plasma-generating device 120 includes an outer cylindrical torch body 181, an inner cylindrical plasma confinement tube 110, and at least one induction coil 126 in a coaxial arrangement. The outer cylindrical torch body 181 can be made of a moldable composite material, for example a moldable composite ceramic material. The inner cylindrical plasma confinement tube 110 can be made of ceramic material and is coaxial with the torch body 181. The induction coil 126 is coaxial with and embedded in the torch body 181 to produce a RF (radio frequency) electromagnetic field whose energy ignites and sustains the plasma 112 confined in the plasma confinement tube 110.

The plasma is produced from a plasma central gas 20 such as argon and/or helium, and can further include hydrogen, oxygen, nitrogen or any combinations thereof. The plasma central gas 20 is typically supplied within the plasma confinement tube 110 through a head 185 of the plasma-generating device 120 at the upper end of the torch body 181. RF current is supplied to the induction coil(s) 126 via power leads (not shown). The plasma central gas 20 can be inserted in the plasma-generating device 120 so that its flow is coaxial with the torch body 181. Alternatively, the plasma central gas 20 can be inserted in the plasma-generating device 120 so that its flow is at an angle with respect to the torch body 181.

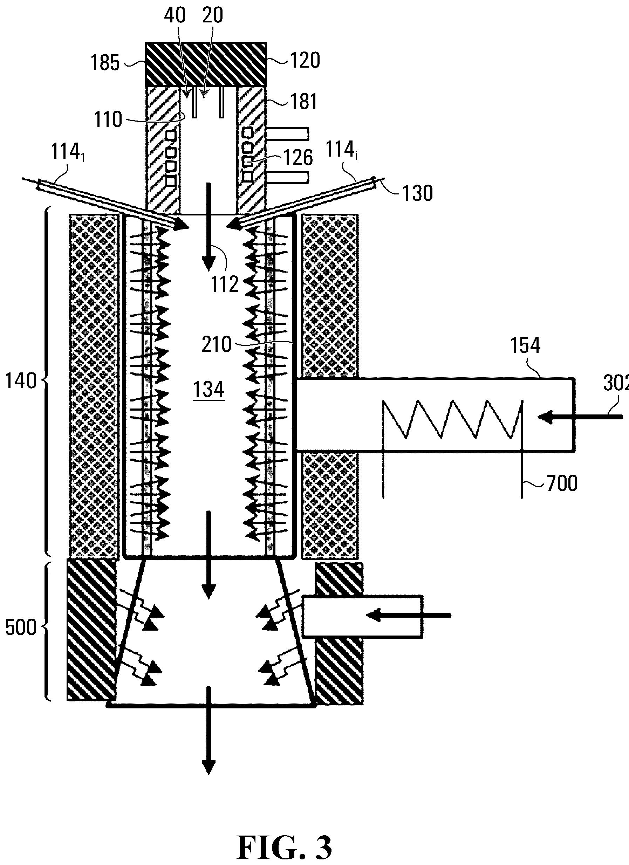

The apparatus 100 can be configured to inject at least one plasma sheath gas 40 at one or more locations downstream or upstream within the plasma confinement tube 110. For example, as shown in Fig. 3, the head 185 includes an inlet for the plasma sheath gas 40 adjacent an inlet for the plasma central gas 20. The plasma sheath gas 40 can stabilize the plasma discharge at the center of the tube and can protect the plasma confinement tube 110 from high heat fluxes emanating from the plasma discharge. In some implementations, the plasma 112 can be generated from the plasma central gas 20 alone or from both the plasma central gas 20 and plasma sheath gas 40. The plasma sheath gas 40 may be any plasma sheath gas known in the art. In some embodiments, the plasma sheath gas comprises argon, hydrogen, or a mixture thereof.

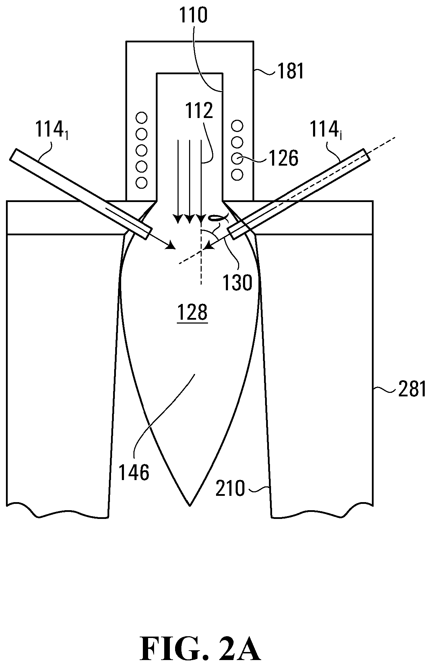

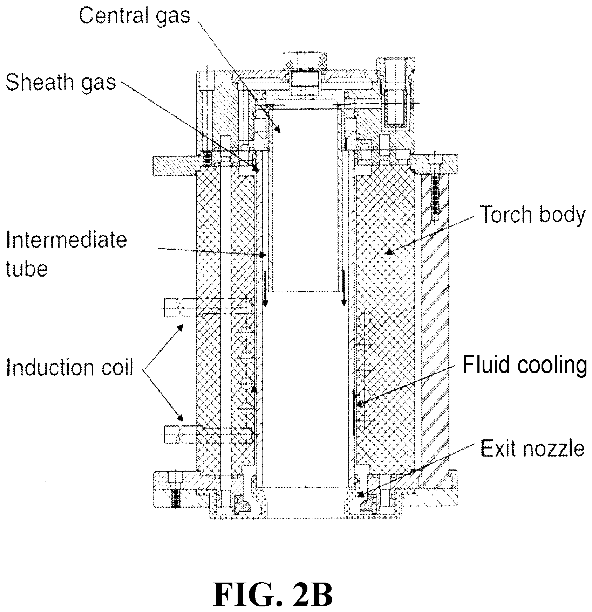

The plasma-generating device 120 is in fluid communication with the reaction chamber 140, through an exit outlet as shown in Fig. 2A or via an exit nozzle as shown in Fig. 2B. Without limitation, the nozzle may be formed of a water-cooled metal or of a radiation cooled refractory material or a combination of both. For example, the nozzle may be configured to include a single outlet, such as a central aperture to generate a single plasma jet. Alternatively, the nozzle may include a plurality of outlets, such as radial apertures for producing corresponding plurality of plasma jets, for example micro-plasma jet channels. Alternatively, the nozzle may include both such central aperture and plurality of radial apertures. The plurality of radial apertures may be disposed on the nozzle to be equally, angularly spaced apart from each other. The radial apertures can be designed for allowing respective fractions of the plasma to flow toward the reaction zone 128 and generate the plasma jet 112. The number of radial apertures and their angle of attack with respect to the central, geometrical longitudinal axis of the plasma head 185 may be selected as a function of a desired distribution of the plasma jet streamlines around the longitudinal axis of the plasma torch. Examples of suitable nozzles are described for example in US 9,718,131, which is herein incorporated by reference in its entirety.

The apparatus 100 further includes one or more precursor injectors 114₁-114ᵢ that inject the precursor material 130 into a reaction zone 128. For example, the reaction zone 128 may be located downstream of the plasma-generating device 120 within the reaction chamber 140 as shown in the figures. Alternatively, at least a portion of the reaction zone 128 may be located within the plasma confinement tube 110 (not shown) such that the one or more precursor injectors 114₁-114ᵢ may be coaxial with the torch body 181 and configured to inject the precursor material 130 within the plasma 112.

When the reaction zone 128 is located downstream of the plasma-generating device 120, the apparatus 100 may include one or more injectors 114₁-114ᵢ configured to inject the precursor material 130 into the reaction zone 128 at a convergence point, the convergence point residing downstream from the plasma generating device 120. For example, the apparatus 100 may include two injectors 114₁-114ᵢ spaced apart one from another by 180 ° and each being configured to inject the precursor material 130 into the reaction zone 128 at the convergence point. For example, the apparatus 100 may include three injectors 114₁-114ᵢ spaced apart one from another by 120° and each being configured to inject the precursor material 130 into the reaction zone 128 at a convergence point. In such embodiments, and irrespective of the number of precursor injectors 114₁-114ᵢ present in the apparatus 100, the injectors are configured such that the precursor material 130 streamlines intersect at the convergence point where the plasma 112 streamlines impinge upon the precursor material 130 streamlines.

In some embodiments, the injectors 114₁-114ᵢ are located at respective injection points placed sequentially along the longitudinal axis of the apparatus 100. For example, one injector point can be located substantially at the plasma 112 discharge location in the reaction zone 128 and at least another injector point can be located downstream at a distant location within the reaction chamber 140. The composition of the nanosized powder particles can be gradually changed from core to shell by changing the reactant gas composition at the different injection points.

In all of the above configurations of the apparatus 100, the plasma 112 heats the precursor material 130 at a temperature that allows the production of a reactant gaseous mixture. For example, the heating occurs at the point where the impinging takes place. Additionally, the heating can occur along a plasma afterglow 146, which is a portion of the plasma 112 below the plasma-generating device 120 that extends along a longitudinal axis of the apparatus 100. In some embodiments, this portion of the plasma 112 extends within at least a portion of the reaction chamber 140. In other words, the reaction zone 128 can be extended to a point located further downstream from the impinging point. Additionally, the heating can occur further downstream, in a dynamic hot wall region 134, which will be further described below.

The reactant gaseous mixture being produced with the plasma occurs through chemical changes, for example dissociation or decomposition of the precursor material 130. The precursor material 130 is injected into the apparatus 100 via injectors 114₁-114ᵢ and contains chemical elements that will form at least part of the nanosized powder particles. The nature of the precursors (e.g., chemical composition), their concentrations, and the operating parameters (e.g., temperature) applied can be independently selected such that the process for manufacturing the nanosized powder is more efficient and/or such that the nanosized powder is of higher quality (e.g. the specific properties of the nanosized powder can be improved), as further discussed elsewhere in this text.

In some embodiments, the precursor material 130 can be mixed with a carrier gas prior to, concomitantly with, or after its injection in the apparatus 100 through injectors 114₁-114ᵢ. The carrier gas is typically a gas that does not react with the precursor material 130. The carrier gas can be the same type of gas as the plasma central gas 20 and/or can include a mixture of gases, and can facilitate transportation of the precursor material 130. The carrier gas relative flow rate can be adjusted over time to allow control of the concentration of the precursor material 130 in the reaction zone 128, thus obtaining a heterogeneous powder composition (e.g., some particles having a first chemical composition and some other particles having a second chemical composition, the first and second chemical compositions being different), for example. The carrier gas can stabilize the precursor material 130 prior to the injection into the apparatus 100. In some embodiments, the carrier gas can reduce a pyrophoric capability of the precursor material 130, thus facilitating handling of the precursor material 130 in industrial settings.

The reactant gaseous mixture can include dissociated or chemically transformed forms of the precursor material 130, e.g., the precursor material 130 can dissociate into a core radical and at least one by-product. For example, when the precursor material 130 includes a silicon or silicon alloy precursor, the apparatus 100 will contain a plasma-generating device 120 generating plasma 112 at a temperature allowing production of a vapor from the precursor material 130 where the vapor may include dissociated silicon atoms.

In conventional single probe plasma systems, the injection of precursor materials is coaxial with the plasma apparatus and parallel to the plasma gas flow, as described in U.S. Patent 9,781,131. In such systems, the injected precursor materials, which are cold relative to the plasma, create a cold region in the core of the plasma afterglow and thus the temperature across the injection streamlines is not uniform. In this relatively cold region of the plasma afterglow, the precursor materials cannot entirely dissociate or chemically transform. This problem with conventional single probe systems can be advantageously mitigated with the apparatus 100 described herein where the injection of the precursor material 130 is configured to be "off-axis" relative to the plasma 112 flow.

In the apparatus 100, the injectors 114₁-114ᵢ are thus configured to be "off-axis" relative to the plasma 112 flow. In other words, the injectors 114₁-114ᵢ inject the precursor material 130 in a direction that intersects with a longitudinal direction of the plasma 112 to minimize (or avoid) creating the relatively cold region of the plasma afterglow of prior art plasma apparatuses. For example, as shown in Fig. 2, the injectors 114₁-114ᵢ inject the precursor material 130 in a direction that intersects with a longitudinal direction of the plasma 112 at an angle α that can be between about 10° and about 80°, including any value therein, e.g., such as any value between about 10° and about 60°, between about 10° and about 30°, between about 15° and about 20°, and the like.

Without being bound by any particular theory, the use of an "off-axis" configuration for the injectors 114₁-114ᵢ probes is believed to induce a better mixing of the injected precursor material 130 in the plasma afterglow 146 of the plasma 112, since fluids injected through the injectors 114₁-114ᵢ impinge at an angle on the plasma 112 streamlines, which induces mixing and a more uniform temperature across the injected fluids. This in turn provides a more uniform energy transfer from the plasma 112 to the injected precursor material 130 and significantly increases the residence time of the reaction species through alteration of their trajectory in the high temperature zone, and thus ensures the dissociation or chemical conversion. It is believed that these benefits can also apply to any doping agent and/or additive gas also injected through the injectors 114₁-114ᵢ.

For example, in some embodiments, the injectors 114₁-114ᵢ are configured for injecting the precursor material 130, and optionally an additive gas or doping agent to expose same to such more uniform energy transfer and increased residence time in at least one of the afterglow zone 146, the reaction zone 128, or the dynamic hot wall region 134. This configuration results in increased temperatures and residence times. A person of skill can therefore expose the injected precursor material 130 (and optionally any additive gas / doping agent injected through the injectors 114₁-114ᵢ) to sufficiently high temperatures and residence time such that at least 60%, e.g., at least 70%, 80%, 85%, 90%, 95%, or at least 100% of the injected precursor material 130 reacts to form the reactant gaseous mixture.

When manufacturing nanosized powders of silicon or silicon alloy, the precursor material 130 and optionally any additive gas / doping agent injected through the injectors 114₁-114ᵢ is exposed in at least one of the afterglow 146 of the plasma 112, the reaction zone 128, or the dynamic hot wall region 134 to a temperature of at least 400°C, such as any temperature within the range of 400°C to 1400°C, e.g., approximately 400°C, 450°C, 500°C, 550°C, 600°C, 650°C, 700°C, or 750°C, and the like, and for a residence time of at least 0.2 sec, such as any residence time within the range of 0.2 sec to 1.0 sec. For example, to achieve 60% decomposition of SiH₄, the temperature and residence time required can be, for example, 637°C/0.8 sec, or 657°C/0.5 sec, or 690°C/0.2 sec; to achieve 85% decomposition of SiH₄, the temperature and residence time required can be, for example, 670°C/0.8 sec, or 690°C/0.5 sec, or 724°C/0.2 sec.

In some embodiments, the precursor material 130 is in fluid form (e.g., a gas or a liquid). For example, in some implementations, when making silicon nanosize particles, the precursor material 130 can include silane (SiH₄), trichlorosilane (SiCl₃H), or any mixtures thereof.

Those skilled in the art will recognize that the present disclosure can be extended to all possible molecules containing group III, IV or V elements (Mendeleev groups as typically referenced in the periodic table), which can react in at least one of the afterglow 146 of the plasma 112, the reaction zone 128, or the dynamic hot wall region 134 to form the desired reactant gaseous mixture and cooled down to form nanosize powders.

In some embodiments, the precursor material 130 is mixed with the additive gas or doping agent gas or precursor thereof prior to, concomitantly with, or after its injection in the apparatus 100 through injectors 114₁-114ᵢ so as to generate a powder including alloys of the elements present in the reactant gaseous mixture. The additive gas or doping agent or precursor thereof is typically a fluid (gas or liquid) that can react with the precursor material 130 and/or can react in the high temperatures existing in at least one of the afterglow 146 of the plasma 112, the reaction zone 128, or in the extended dynamic hot wall region 134 (extending downstream of the reaction zone 128), which results in the presence of the doping agent in the powder particles.

In some embodiments, the additive gas or doping agent or precursor thereof can be injected to have a concentration of from 0 to about 5000 ppm, including any value therein. For example, up to 2000 ppm, up to 1000 ppm, up to 500 ppm, up to 200 ppm, up to 100 ppm, and the like. Those skilled in the art will readily recognize that changing the concentration or the location of the injection will modify the profile of the additive / doping concentration with an injection upstream favoring the penetration of the additive / doping to the particle core and an injection downstream causing the additive / doping to remain preferentially close to the particle surface.

In some embodiments, the additive gas or doping agent gas or precursor thereof relative flow rate can be adjusted over time so as to allow control of the concentration of the doping agent or precursor thereof in at least one of the afterglow 146 of the plasma 112, the reaction zone 128, or in the extended dynamic hot wall region 134, thus obtaining a heterogeneous powder composition, for example.

Examples of mixtures of precursor material 130 and optional doping agent may include at least one of the following:
- the precursor material 130 includes silane (SiH₄), trichlorosilane (SiCl₃H), germane (GeH₄) or a mixture thereof;
- the precursor material 130 or doping agent includes digallane (Ga₂H₃) or arsine (ArH₃) or a mixture thereof;
- the precursor material 130 includes silane (SiH₄) and the doping agent includes diborane (B₂H₆) in a ratio between 1000000:1 and 100000:1; e.g., between 100000:1 and 10000:1; between 10000:1 and 1000:1; between 1000:1 and 100:1; between 100:1 and 10:1; or even more, to obtain p-doping of the silicon particles;
- the precursor material 130 includes silane (SiH₄) and the doping agent includes phosphine (PH₃) in a ratio between 1000000:1 and 100000:1; e.g., between 100000:1 and 10000:1; between 10000:1 and 1000:1; between 1000:1 and 100:1; between 100:1 and 10:1; or even more, to obtain n-doping of the silicon particles;
- the precursor material 130 includes silane (SiH₄) and the doping agent includes ammonia (NH₃) in a volume ratio between 1:0 and 1:1; e.g., between 1:1 and 1:2; between 1:2 and 1:4; or even less, to generate SiNₓ alloys with x being from 0 to 1, e.g., from 0.5 to 0.9, and the like.

For example, when the nanoparticle powders are silicon or silicon alloy particles doped with nitrogen, the nanoparticle powders have a nitride layer. In some embodiments, the nitride layer can have a thickness of no more than 0.75 nm, e.g., no more than 0.50 nm, 0.25 nm, 0.10 nm, 0.06 nm, and even less.

In some embodiments, the nanoparticle powders include a relatively large amount of doping agent. The doping agent X can be present in the material in a Si:X proportion between 1:0.3 and 1:1, e.g., between 1:0.4 and 1:0.9, between 1:0.5 and 1:0.8, and between 1:0.6 and 1:0.7.

For example, when the Si nanosize particles are doped with nitrogen, the nanosize particles can present a substantially uniform nitrogen content throughout the volume of the nanoparticle so as to form a nearly stoichiometric SiNₓ alloy.

In some embodiments, the nanoparticle powders have a high degree of purity. For example, the nanoparticle powders can have a degree of purity of at least 99.95%, or at least 99.96%, 99.97%, 99.98%, 99.99%, 99.995%, and even more (e.g., at least 99.998%). For example, when the nanoparticle powders include a silicon or silicon alloy core, the core can include at least 99.95% of the silicon or silicon alloy.

In some embodiments, the precursor material 130 can additionally or alternatively be mixed with an additive gas or doping agent prior to, concomitantly with, or after its injection in the apparatus 100 through injectors 114₁-114ᵢ. In embodiments where the additive gas or doping agent is mixed with the precursor material 130 concomitantly with, or after its injection in the apparatus 100 through injectors 114₁-114ᵢ, the additive gas or doping agent can be injected into the apparatus 100 through the same injectors 114₁-114ᵢ as for the precursor material 130 or through different injectors 114₁-114ᵢ.

In some embodiments, presence of the additive gas or doping agent in at least one of the plasma generating device 120, the reaction chamber 140, and the quench chamber 500 can produce a passivation layer on the nanosize particles, resulting in particles having a core and layer structure.

Chemical Vapor Deposition (CVD), typically carried out in an atomic layer deposition (ALD) reactor, can be used to deposit a passivation layer on conventional nanosize particles after their production. However, in such cases, nanosize particles can be exposed to air during the transfer of the nanosize particles from the plasma apparatus where they are produced to the ALD reactor. In the present disclosure, the nanosize particles can be advantageously covered *in situ* (within the apparatus 100) with the passivation layer before any potential exposition to oxygen/air and moisture/water, thus avoiding the problem encountered with conventional CVD processes.

In some embodiments, the presence of a passivation layer can reduce the reactivity of the nanosized powder to oxygen/air and/or moisture/water, thereby avoiding, reducing or retarding the formation of an oxide layer. The chemical composition of the passivation layer will depend on the additive gas chosen. For example, using an additive gas such as oxygen will result in an oxide layer, ammonia or nitrogen when making a powder of silicon or silicon alloy will result in a passivation layer made of a nitride of the silicon (Si₃N₄ or any other stochiometric or non-stochiometric Si-N compound SiₓN_{y}) or silicon alloy, while using an additive gas such as methane or acetylene will result in an amorphous carbon passivation layer.

In some embodiments, presence of the additive gas in the reaction chamber 140 and/or the quench chamber 500 can also act as a particle growth inhibitor. This can be useful in controlling the diameter of the nanosize particles (e.g., the particle size distribution or "PSD"). For example, concentration of gaseous species like oxygen injected in the reaction chamber 140 and/or the quench chamber 500 enables control over the size of the nanosize particles in a size range smaller than the nominal diameter obtained without the growth inhibitor, and the diameter is inversely proportional to the growth inhibitor concentration.

Changing the concentration or the location of the injection of the additive gas will modify its concentration profile. For example, an injection upstream in the apparatus 100 can favor the penetration of the element present in the additive gas into the particle core whereas an injection downstream in the apparatus 100 can cause the element present in the additive gas to remain preferentially close to the particle surface and/or in the passivation layer.

For example, the additive gas can be an oxygen containing species such as H₂O or CO₂, N containing gases such as N₂, NH₃, carbon-based gases such as CH₄ or C₂H₂ or any other gas found suitable by those ordinarily skilled in the art. The concentration of the additive gas being injected into the reaction chamber 140 and/or the quench chamber 500 can be from 0 to 5000 ppm, e.g., less than 500 ppm.

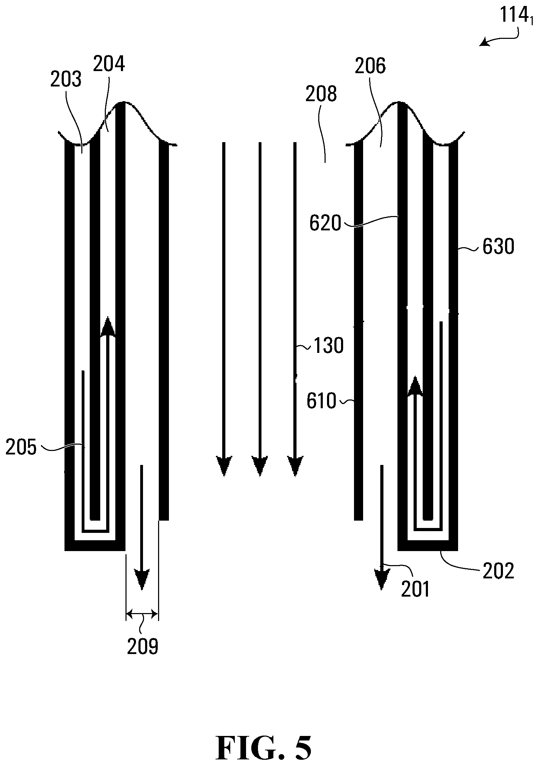

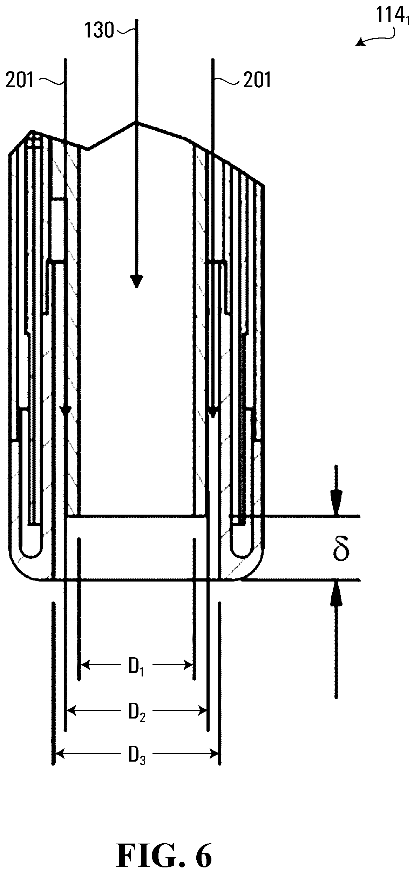

Returning to structural features of the apparatus 100, Figs. 5-6 show a cross-sectional view of an implementation of the injectors 114₁-114ᵢ. Here, injector 114₁ includes a channel 208 for injecting the precursor material 130 alone or in combination with the carrier gas, additive gas or doping agent into the apparatus 100. The channel 208 is at least partially defined by an annular inner surface 610. Radially outward from the annular inner surface 610 is a channel 206 for injecting a sheath gas 201 that is at least partially defined by an annular inner surface 620. The channel 206 can be configured to enable a flow of sheath gas 201 within a lumen 209. An annular outer surface 630 is disposed radially outwardly from the annular inner surface 620, and together the two surfaces define channels 203, 204 that are configured to allow circulation of a cooling fluid 205. In some embodiments, the cooling fluid 205 can be a high pressure, high velocity cooling fluid (e.g., water) to prevent overheating of the injector 114₁. The outer surface 630 and inner surface 620 join at a point defining the tip 202 of the injector 114₁ and forms an external outlet having a cross section D₃, whereas the channel 206 forms an intermediate outlet having a cross section D₂, and whereas the channel 208 forms an internal outlet having a cross section D₁, where D₃ > D₂ > D₁. As best shown in Fig. 6, the external outlet extends in a plane downstream of the internal outlet by a distance δ.

In operation, the channel 206 carries the sheath gas 201 into the apparatus 100 to allow it to isolate the cooled tip 202 from exposure to precursor material 130 (and/or any carrier gas, additive gas or doping agent) flowing out of the channel 208 and thereby prevent, reduce or minimize condensation of the precursor material 130 onto the external outlet of the injector 114₁, including tip 202. An appropriate flow of sheath gas 201 can thus allow for a more continuous operation of the apparatus 100, as there is less risk of downtime that can be required to clean up eventual condensation that would otherwise more often occur at the outlet of the injector 114₁.

In conventional plasma reactors, the temperature gradient across the reaction zone is relatively steep, e.g., there can be a radial gradient whereby the temperatures along the axial direction in the reaction chamber are extremely high, while in the large area towards the walls of the reaction chamber the temperatures are relatively lower. Additionally or alternatively, there can be an axial gradient. Additionally, conventional plasma reactors are associated with a significant loading effect when the injection of the precursor occurs. As flow rates of precursor material or sheath gas are increased, temperatures in some areas of the injection zone can drop to the unfavourable territory and, as a result, efficiency of the process is reduced, amorphous nanosize particles are obtained, and the quality of the obtained powder is reduced.

These particular problems with conventional plasma reactors are advantageously mitigated with the method of the present invention where gas pre-heated to a desired temperature is injected into the reaction chamber 140 to form a dynamic hot wall region 134 (shown in Fig. 3). The presence of a dynamic hot wall region 134 extends the reaction zone 128 to a zone downstream of the original point of contact between the plasma 112 and the precursor material 130, maximizing exposure of the precursor material 130 to high temperatures and residence times. In other words, the injection of hot gases in the dynamic wall region 134 allows a flatter temperature profile along the axis, and therefore a longer residence time in hot regions.

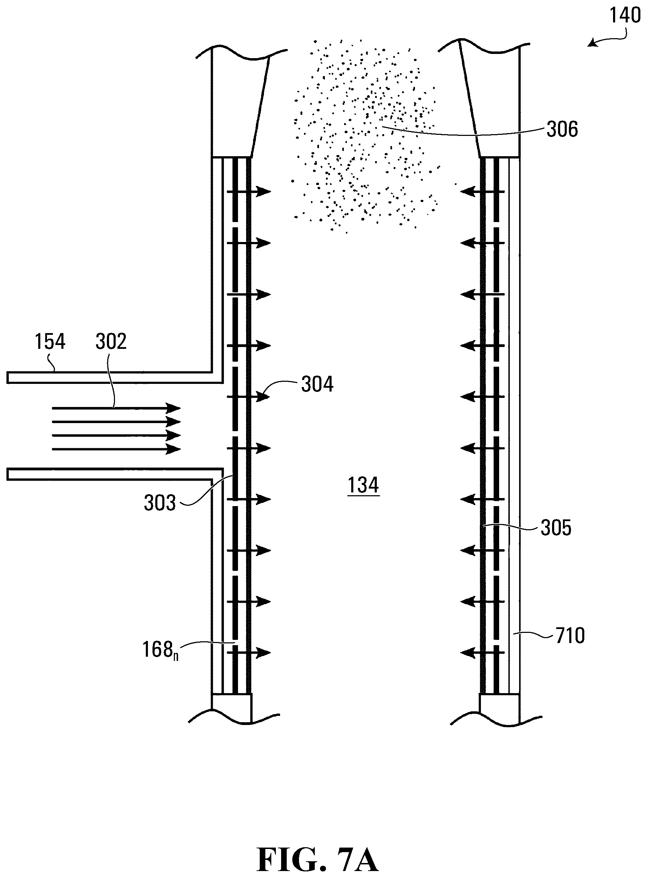

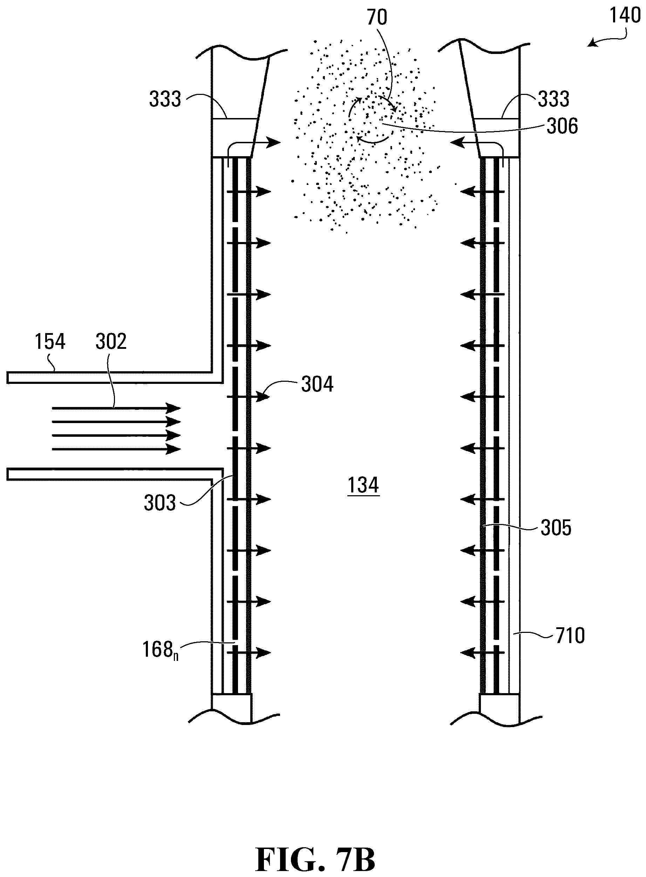

Figs. 7A and 7B show details of the reaction chamber 140 of Fig. 3 that includes an inlet 154 for injecting a gas 302 pre-heated to a desired temperature (e.g., 600°C) into the reaction chamber 140. The person of skill will readily understand that the gas 302 and the additive gas discussed above can be one and the same.

The gas 302 pre-heated to the desired temperature then flows through a diffuser wall 303 disposed within the reaction chamber 140 and sandwiched between an external wall 710 of the reaction chamber 140 and an internal porous wall 305, forming a pre-heated radial gas flow 304. The pre-heated radial gas flow 304 creates a "dynamic hot wall" region 134 that prevents reactive species, e.g., reactive species present in the precursor material 130 and/or any carrier gas, additive gas or doping agent, and/or reactive species present in the gaseous mixture, from reaching the internal wall 305 of the reaction chamber 140. The presence of the dynamic hot wall region 134 thus prevents, reduces or minimizes heterogeneous decomposition and chemical vapor deposition of reactive species on the internal wall 305 while providing enough energy to ensure the complete reaction of the remaining precursor material 130 and/or reactive species, mostly through heterogeneous pyrolysis on the existing seeds 306 (also referred as "nascent particles" or "aerosolized solids") formed immediately upstream.

As shown in Fig. 7B, the diffuser wall can include additional diffuser outlets 333 disposed within the reaction chamber 140 and sandwiched between the external wall 710 of the reaction chamber 140 and the internal porous wall 305 at an upper portion of the reaction chamber 140. The additional diffuser outlets 333 are configured to inject at least a portion of the pre-heated gas so that it enters the reaction chamber 140 at zone 70 that is in the vicinity of the injection probe injectors 114₁-114ᵢ tips 202. The diffuser outlets 333 further ensures the timely mixing, dispersion and conversion of the precursor material 130 and/or any carrier gas, additive gas or doping agent as soon as it is injected into the reactor.

In operation, the plasma 112 and plasma afterglow 146 provide very rapid heating of the precursor material 130, which then generates the gaseous mixture that flows into the dynamic hot wall region 134 where such high temperature is sustained by the pre-heated radial gas flow 304. This advantageously enables the decomposition and/or vaporization of the precursor material 130 at high temperatures for a much higher throughput. For example, the inventors were able to process precursor material 130 including silane with a throughput of at least at least 1 kg/hour, such as from 1 kg/hour to 3 kg/hour, and in some embodiments even more.

The implementation of the dynamic hot wall region 134 also allows for an adjustable dilution of the aerosolized nascent particles 306 (also referred to as "nanoparticle seeds" or "nascent seeds of the nanoparticles") and precursor material 130 and/or any doping agent so as to limit particle growth via coagulation of nascent particles 306. More dilute nanosize particles aerosols limit the probability of collisions of nascent particles 306 by increasing the mean free path of the particles. Also, a lower concentration slows the diffusion rate of gases to the surface of nanoparticle seeds. Moreover, the adjustment of the gas temperature in the dynamic hot wall region 134 allows modification of the degree of crystallinity of the nanosize particles formed as a lower temperature favors less crystallinity and vice-versa.

In some embodiments, controlling crystallinity of the nanosize particles can provide a number of advantageous features. For example, in making silicon nanosize particles, amorphous components of the nanosize particles can incorporate hydrogen atoms to form a-Si:H, which are used in the thin-film photovoltaic industry. The processes and apparatuses described herein advantageously allows for the adjustment of the nanosize particles' characteristics for the intended application.

The pre-heated radial gas flow 304 can be of any suitable magnitude. For example, in some embodiments the flow can be in the range of from 50 and 2000 standard litre per minute ("slpm"), e.g, between 50 and 200 slpm, 200 and 500 slpm, 500 and 1000 slpm, 1000 and 2000 slpm, and even more (e.g., at least 2000 slpm).

The thermal energy can be applied to the gas 302 with a heating element 700 as shown in Fig. 3, e.g., a heat exchanger. The thermal energy applied to the gas 302 can be performed with the porous wall 305, which can additionally or alternatively double as a heating element. In such embodiments, thermal energy can be brought to the porous wall 305 by induction heating, resistive heating, or infrared heating. In the latter case, an infrared emitter can be positioned substantially coaxial to the porous wall 305. The infrared emitter can be positioned at the location of the gas wall diffuser 303. The thermal energy can be transferred to the gas 302 both by the infrared emitter and the porous wall 305 such that the infrared emitter doubles as the diffuser wall 303 and heats the gas 302 by convection, radiation and indirectly by heating the porous wall 305. The porous wall 305 can be made of a metal, a ceramic or any other porous heat-resistant material, including composite materials.

The dynamic hot wall region 134 can have any suitable length to maximise complete reaction of the precursor material 130, while remaining economically viable and efficient. For example, in some embodiments, the dynamic hot wall region 134 can have a length in the longitudinal direction of the apparatus 100 that is between about 100 mm and 200 mm, e.g., between about 200 mm and 400 mm, 400 mm and 700 mm, 700 mm and 1000 mm, and more (e.g., at least 1000 mm). In a similar fashion, the porous wall 305 of the dynamic hot wall region 134 can have a corresponding length in the longitudinal direction of the apparatus 100 that is between about 100 mm and 200 mm, e.g., about 200 mm and 400 mm, 400 mm and 700 mm, 700 mm and 1000 mm, and more (e.g., at least 1000 mm). In a similar fashion, the diffuser wall 303 of the dynamic hot wall region 134 can have a corresponding length in the longitudinal direction of the apparatus 100 that is between about 100 mm and 200 mm, e.g., between 200 mm and 400 mm, 400 mm and 700 mm, 700 mm and 1000 mm, and more (e.g., at least 1000 mm).

The diffuser wall 303 includes a plurality of apertures 168n to allow passage of the gas 302 therethrough. The plurality of apertures 168n can be dimensioned and disposed in any suitable manner over the gas wall diffuser 303. For example, the plurality of apertures 168n can have at least one of a substantially homogeneous shape, dimension, and disposition over the gas wall diffuser 303. For example, the plurality of apertures 168n can all have a substantially circular shape and be disposed in a substantially homogeneous disposition over the gas wall diffuser 303. In some embodiments, the plurality of apertures 168n can have an elongated shape in a longitudinal direction of the apparatus 100. The plurality of apertures 168n can have an elongated shape in a tangential direction of the apparatus 100. The plurality of apertures 168n can have a dimension that increases downstream, or reduces downstream. There can be more apertures 168n disposed in an upstream portion of the diffuser wall 303 than in a downstream portion thereof, while in other embodiments, there can be more apertures 168n disposed in a downstream portion of the diffuser wall 303 than in an upstream portion thereof. Other examples of implementation are also possible.

As will be apparent to the person of skill, the design and operation of the herein described "dynamic hot wall" differs from prior art designs. In the present disclosure, the apparatus 100 is configured such that the injected gas 302 provides an even, continuous radial gas flow 304 and thus prevents the deposition of powders on the surfaces. Other advantageous features obtained with the present disclosure include but are not limited to: increasing the reaction/conversion rate (supplemental heat); controlling morphology and crystallinity of the nanosize particles (prolonged residence time); controlling particle sizes (dilution effect); avoiding powder deposition, deposits, blockage, and the like.

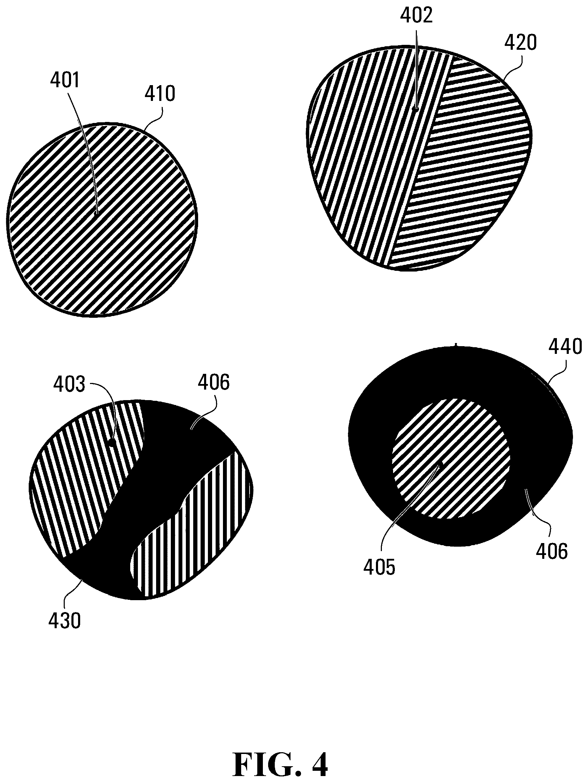

Several crystalline structures can be obtained with the processes and apparatuses herein described. The process parameters can be controlled to have one or more crystalline structure(s) in the nanosize particles of a given powder batch made in a single run. Fig. 4 shows illustrations of nanosize particles 410, 420, 430, 440 each having different crystalline structures. For example, nanoparticle 410 is shown with a monocrystalline 401 structure, nanoparticle 420 is shown with a polycrystalline 401, 402 structure, nanoparticle 430 is shown with crystalline zones 403 with an amorphous zone 406 in between, and nanoparticle 440 is shown with a core-shell geometry where the core has a crystalline structure 405 and an amorphous layer 406 fully encapsulating the core.

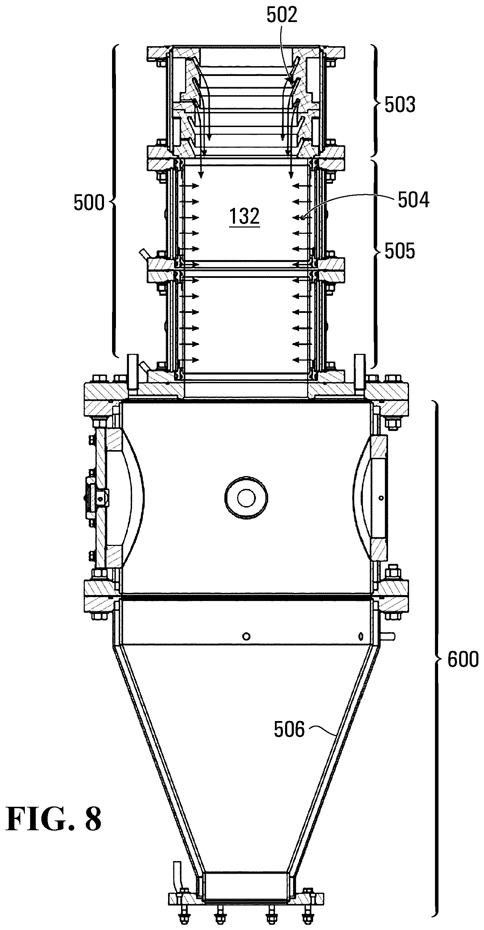

Fig. 8 shows the cooling chamber 500, which can be connected to the reaction chamber at a lower part of the apparatus 100 as shown in Fig. 3. The cooling chamber 500 defines at least one cooling zone 132 (also referred to as the "quenching zone"), which is sized and configured to allow controlled droplet nucleation and growth. In some embodiments, the cooling chamber 500 is in fluid communication with the reaction chamber 140 such that the at least one cooling zone 132 is in fluid communication with the dynamic hot wall region 134.

The gaseous mixture flowing from the reaction chamber 140 is cooled in the cooling chamber 500 to a temperature where the reaction substantially stops. The cooling chamber 500 includes an injection module 503 configured to inject a longitudinal cooling gas 502 (injected along a longitudinal direction of the cooling chamber 500) or an injection module 505 configured to inject a radial cooling gas 504. In some embodiments, the cooling chamber 500 can include both the injection module 503 and the injection module 505 for injecting the longitudinal cooling gas 502 and the radial cooling gas 504, respectively. In other embodiments, the cooling chamber 500 can include a plurality of injection modules for injecting a corresponding plurality of cooling gases (not shown).

The composition of either or both the longitudinal cooling gas 502 and the radial cooling gas 504 can be selected to carry the growth inhibitor previously discussed. Accordingly, the longitudinal cooling gas 502 and the radial cooling gas 504 can be one and the same, for example.

The chemical composition of the cooling gases may, in some embodiments, be identical to one or more of the other gases injected in the apparatus. In some embodiments, the cooling gas may advantageously be constituted of recycled gas, where the gas being recovered from the apparatus 100 at a lower outlet thereof will be recycled, cooled down to a desired temperature and reinjected into the apparatus 100 as one or both of the herein described cooling gases. For instance, when one injects into the apparatus the gases listed in tables 2A and 2B, namely 30 argon + 95 argon +15 H₂ + 50 or 150 argon and 250 N₂, one obtain a recycled cooling gas having the following chemical composition 40% argon, 3 % H₂ and 57% N₂ or 51% argon, 3% H₂ and 46% N₂.

In some embodiments, the additional gas dilution obtained with the injection of one or more cooling gases in the cooling chamber 500 can also help in preventing the coagulation of hot nanosize particles and thus also contribute to controlling the size of the nanosize particles.

The temperature and/or flow rate at which either or both the longitudinal cooling gas 502 and the radial cooling gas 504 is introduced in the cooling chamber 500 can also affect the condensation rate of the reactant gaseous mixture, controlling the size and PSD of the nanosized powder particles and prevent the particles from adhering to the internal walls 506 of the apparatus 100. Specifically, a colder quenching gas will increase the speed at which the reactant gaseous mixture condenses, thereby decreasing the PSD. Conversely, hotter quenching gas will generally result in increased PSD. Similarly, a higher temperature will increase the amount of time the cores react with the additive gas, which can result in a thicker passivation layer, whereas a lower temperature can generally result in a thinner passivation layer. Accordingly, the temperature and/or flow rate at which either or both the longitudinal cooling gas 502 and the radial cooling gas 504 is introduced in the cooling chamber 500 can be controlled to modulate the PSD as well as produce a passivation layer with the desired thickness. The temperature range will naturally depend on the chemical composition of the reactant gaseous mixture. For example, when manufacturing nanosized powders of silicon or a silicon alloy, either or both the longitudinal cooling gas 502 and the radial cooling gas 504 can be injected in the cooling chamber 500 to a temperature where the reaction substantially stops, such as at a temperature selected in the range of from 420 to 600°C, or in the range of from 300 to 420°C, for example at 420°C, or lower.

In some embodiments, the growth and crystallinity properties of the particles obtained in the present disclosure can thus be controlled by adjusting the flow rate, the chemical composition, and temperature of the gases that are injected into the apparatus 100, e.g., those mixed with the precursor material 130, those injected into the reaction chamber 140, and those injected into the cooling chamber 500.

Several variants will become clear to the person of skill in view of this disclosure. For example, in some embodiments, a first additive gas can be introduced along with the precursor material 130, while optionally a second additive gas identical in nature or different from the first additive gas, can be introduced in the dynamic hot wall region 134 in the form of the pre-heated radial gas flow 304, while optionally a third additive gas, identical in nature or different from the first and second additive gases, can be introduced in the cooling section 132 (also referred herein as "quench section") in the form of either or both the longitudinal cooling gas 502 and the radial cooling gas 504. Such flexibility in the injection point of the additive gas, in the flow rate, and in the temperatures allows the person of skill to control and tailor the overall effect on particle growth and properties.

Without being bound by any particular theory, it is believed that the reaction of the cores of the particles with the additive gas occurs when the cores are in contact with the additive gas at a temperature within a temperature range allowing the reaction. Diffusion through the particle radius can also be important depending on gaseous species/temperatures. This temperature range will depend on the nature of both the cores and the additive gas. In addition, the lower end of this temperature range must be lower than the temperature at which the reactant gaseous mixture condenses and the cores form, otherwise the cores will not be formed at the temperature at which the reaction needs to occur. For example, when the particles are made of silicon or a silicon alloy, and the additive gas is N₂, the reaction temperature must be less than about 3265°C (the vaporization point of silicon), while remaining above the minimum temperature for Si and N₂ to react during the available residence time.

Again, without being bound by any particular theory, it is believed that the thickness of the passivation layer can depend on many factors but is ultimately determined by the extent of the reaction of the additive gas (passivating layer gas precursor) on the surface of the core of the particles and by the extent of the diffusivity of the additive gas over the surface of the core of the particles and more generally over the particles. When the reaction occurs to a larger extent, a thicker passivation layer will generally result, and vice versa. Alternatively, when making silicon-based nanoparticles, the silicon itself can diffuse in the passivation layer to the outside face and growth proceeds. Tests have shown that the thickness of the passivation layer is increased by increasing the time spent by the cores in sections of the apparatus where the passivation layer can be formed, for example in the reaction zone 134 or in parts of the quench section 132. For example, in parts of the quench section 132 where the temperature is low enough for vapor condensation to occur, but high enough for the reaction between the particles and the passivating layer gas precursor to occur. This can be increased by one or more of: increasing the volume of this part of the quench section 132; increasing the concentration of the passivating layer gas precursor in the quench section 132; increasing the temperature of the passivating layer gas precursor, and providing auxiliary heating, e.g., as described in US 9,516,734, which is incorporated herein by reference, to increase residence time.

In some embodiments, where preserving diffusivity properties of the nanoparticle layer for electrons and ions is desirable, controlling the thickness of the passivation layer can also offer several advantages. For example, in such applications, the thickness of the passivation layer can be at most about 5 nm, or at most about 3 nanometers. Therefore, one or more of the above factors can be adjusted to produce such a passivation layer, given the composition of the nanosize particles and the passivating gas precursor.

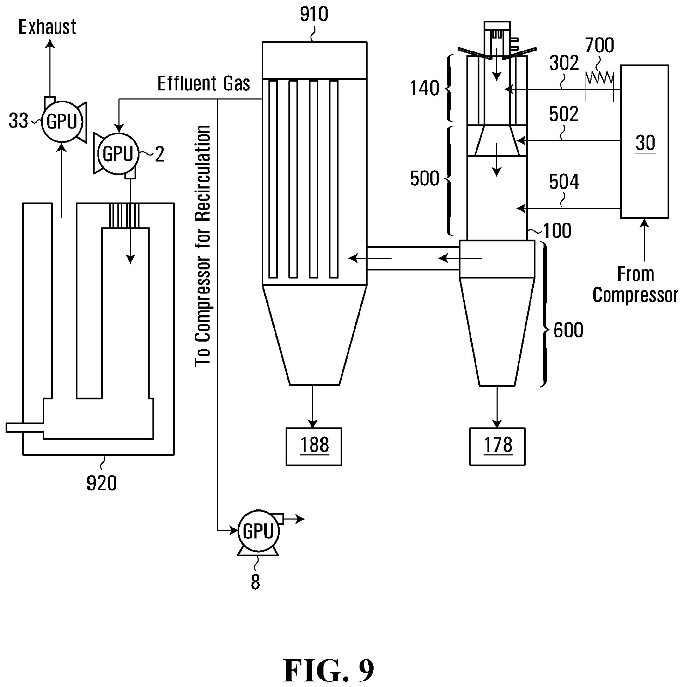

Fig. 9 shows an assembly 900 for implementing the herein described processes at an industrial scale for producing nanosized particles. The assembly 900 includes the apparatus 100 and a gas distributor 30 in fluid communication with the apparatus 100 to inject gases into the reaction chamber 140 and into the cooling chamber 500 of the apparatus 100. As shown, the injected gases include the gas 302 that is pre-heated at the desired temperature with element 700 and injected into the reaction chamber 140, and the longitudinal cooling gas 502 and radial cooling gas 504 that are injected into different locations of the cooling chamber 500. As discussed previously, the gases 302, 502, 504 can be the same or different, according to different applications and desired properties of the nanosize particles.

Once formed, the nanosize particles can be separated from the gas flow in a downstream cyclone (not shown) and funneled to a powder collection point 178 and/or in a collection filter 910 in fluid communication with the apparatus 100 and funneled to a powder collection point 188, depending on their PSD. The nanosize particles can be transported to the downstream cyclone and/or collection filter 910 by gravity or can be propelled by a gas or by a vacuum. The nanosize particles can be transported to the downstream cyclone and/or collection filter 910 in a direction other than vertical with respect to the apparatus 100.

Optionally, at least a portion of the effluent gas obtained after separation of the nanosize particles from the gas flow can be recycled and pumped backed into the process with the use of at least one compressor (not shown). Optionally, at least a portion of the effluent gas obtained after separation of the nanosize particles from the gas flow can be processed through an abatement system 920 generating an exhaust. While the assembly 900 is shown in Fig. 9 to include three gas pumping units (GPU) 2, 8, 33 at certain locations, more than three GPUs or less than three GPUs can be used in different applications and/or at different locations.

In this assembly 900, a gaseous precursor is introduced substantially in the hot zone of the apparatus 100 where the hot zone is generated by the thermal plasma where the gaseous precursor starts to decompose into its atomic constituents. The multiple injectors allow for an injection of the gaseous feedstock downstream from the plasma exit to ensure the uniform reaction of the gas or gases. The use of a plurality of injectors allows for a higher feedstock input. Downstream from the torch is also a dynamic hot wall region where a radial flow of hot gas generates a continuously renewed virtual surface that keeps the reactive species away from the solid reactor walls to prevent heterogeneous decomposition and chemical vapor deposition. The dynamic hot wall also provides additional energy to the system to allow the complete decomposition of the feedstock at unseen rates, therefore enabling the economically viable production of nanometric powder.

As a non-restrictive example of a variant, the precursor material in fluid form can be injected directly in the plasma gas of one or a plurality of DC plasma torches. In turn this can be used in combination with multiple injection probes downstream or upstream from the plasma heat source or sources.

### Battery Applications

The nanoparticle powders described herein can be used in the manufacture of rechargeable electrochemical cells having advantageous properties, particularly when these nanoparticle powders are based on silicon or silicon alloy. Rechargeable electrochemical cells typically are lithium secondary cells constituted by a positive electrode for a lithium secondary cell, a negative electrode and an electrolyte layer.

The positive electrode typically has a positive current collector of, for example, an aluminum foil including expanded metal (such as expanded metal foil available from Exmet, USA), optionally with a carbon-based protective coating (such as current collector available from Exopack^{®} Advanced Coating, USA) and a layer of a positive electrode active material including C-AₓM(XO₄)_{y} including a binder and generally an electroconductive additive. As a binder contained in the layer of the positive electrode active material, it is possible to use a known resin material routinely used as a binder for the layer of the positive electrode active material for this type of lithium secondary cell. Examples include polyvinylidene fluoride (PVdF), polytetrafluoroethylene, polyvinyl chloride, polyvinylpyrrolidone, styrene-butadiene rubber (SBR), polymethylmethacrylate (PMMA), polyethylene oxide (PEO) and mixtures thereof. Among these, polyvinylidene fluoride and derivatives are typically used for lithium ion type battery, PEO and derivatives are typically used for lithium metal polymer battery. As an electronic conductive additive contained in the layer of the positive electrode active material, it is possible to use a known conductive agent routinely used for this type of secondary lithium cell in, without any limitation, spherical (granular) form, flaky form, a fibrous form and the like. Examples include carbon black, graphite, carbon fiber, nanotube, graphene, vapor growth conductive fiber (VGCF) and mixtures thereof.

Specifically, the negative electrode can contain a collector having coated thereon a material obtained by mixing a negative electrode active substance and a binder. The negative electrode active substance includes the herein described silicon or silicon alloy nanosize particles alone or in combination with any other active substance. Examples include a carbon material, such as natural graphite, artificial graphite, non-graphitizable carbon and graphitizable carbon, a metallic material, such as metallic lithium, a lithium alloy and a tin compound, a lithium-transition metal nitride, a crystalline metallic oxide an amorphous metallic oxide, a titanium oxide, such as TiO₂ or carbon-coated TiO2, a lithium titanium oxide such as Li₄Ti₅O₁₂ or carbon-coated Li₄Ti₅O₁₂, and an electroconductive polymer. The binder can be a known organic or inorganic binder such as those shown for the binder that can be used in the positive electrode, such as polyvinylidene fluoride (PVdF). Examples of the collector of the negative electrode include copper and nickel in the form of a mesh, a punching metal, a foamed metal, a foil processed into a plate, or the like.

The electrolyte layer is held with the positive electrode layer and the negative electrode layer and contains an electrolytic solution, a polymer containing an electrolytic salt, a polymer gel electrolyte, or a polymer electrolyte plasticized or not. In the case where an electrolytic solution or a polymer gel electrolyte is used, a separator is typically used in combination. The separator electrically insulates the positive electrode and the negative electrode and retains an electrolytic solution or the like.

The electrolytic solution can be any electrolytic solution that is typically used in a lithium secondary cell, and includes ordinary examples of an organic electrolytic solution, polymer electrolyte, or an ionic liquid and mixtures thereof. Examples of the electrolytic salt include LiPF₆, LiBF₄, LiClO₄, LiAsF₆, LiCl, LiBr, LiCF₃SO₃, LiN(CF₃SO₂)₂, LiC(CF₃SO₂)₃, LiN(FSO₂)₂, LiC(FSO₂)₃, lithium bis(oxalato)borate, lithium difluoro(oxalato)borate, lithium tetrafluoro(oxalato)phosphate, Li₂B₁₂FₓH₁₂₋ₓ (10 ≤ x ≤ 12), LiI, LiAlCl₄, NaClO₄, NaBF₄ and NaI, and particularly an inorganic lithium salt, such as LiPF₆, LiBF₄, LiClO₄, and an organic lithium salt represented by LiN(SO₂CₓF₂ₓ₊₁)(SO₂C_{y}F_{2y+1}), wherein x and y each represents independently an integer of 0 or from 1 to 4, provided that x+y is from 2 to 8. Specific examples of the organic lithium salt include LiN(SO₂F)₂, LiN(SO₂CF₃)(SO₂C₂F₅), LiN(SO₂CF₃)(SO₂C₃F₇), LiN(SO₂CF₃)(SO₂C₄F₉), LiN(SO₂C₂F₅)₂, LiN(SO₂C₂F₅)(SO₂C₃F₇) and LiN(SO₂C₂F₅)(SO₂C₄F₉). Among these, LiPF₆, LiBF₄, LiN(CF₃SO₂)₂, LiN(SO₂F)₂ and LiN(SO₂C₂F₅)₂ are typically used as the electrolyte owing to their excellent electric characteristics. The electrolytic salt can be used solely or as a combination of two or more kinds.

The organic solvent for dissolving the electrolytic salt can be any organic solvent that is ordinarily used in a non-aqueous electrolytic solution of a lithium secondary cell without particular limitation, and examples include a carbonate compound, a lactone compound, an ether compound a sulfolane compound, a dioxolane compound, a ketone compound, a nitrile compound and a halogenated hydrocarbon compound. Specific examples include a carbonate compound, such as dimethyl carbonate, methylethyl carbonate, diethyl carbonate, ethylene carbonate, fluoroethylene carbonate, propylene carbonate, ethylene glycol dimethyl carbonate, propylene glycol dimethyl carbonate, ethylene glycol diethyl carbonate and vinylene carbonate, a lactone compound, such as δ-butyrolactone, an ether compound, such as dimethoxyethane, tetrahydrofuran, 2-methyltetrahydrofuran, tetrahydropyran and 1,4-dioxane, a sulfolane compound, such as sulfolane and 3-methylsulfolane, a dioxolane compound, such as 1,3-dioxolane, a ketone compound, such as 4-methyl-2-pentanone, a nitrile compound, such as acetonitrile, propionitrile, valeronitrile and benzonitrile, a halogenated hydrocarbon compound, such as 1,2-dichloroethane, and an ionic liquid, such as methyl formate, dimethylformamide, diethylformamide, dimethylsulfoxide, an imidazolium salt and a quaternary ammonium salt. The organic solvent can be a mixture of these solvents. Among the organic solvents, at least one non-aqueous solvent selected from the group consisting of carbonate compounds is typically contained since it is excellent in solubility of the electrolyte, dielectric constant and viscosity. Examples of the polymer compound used in the polymer electrolyte or the polymer gel electrolyte include a polymer, a copolymer and a crosslinked product thereof of ether, ester, siloxane, acrylonitrile, vinylidene fluoride, hexafluoropropylene, acrylate, methacrylate, styrene, vinyl acetate, vinyl chloride, oxetane or the like, and the polymer can be used solely or as a combination of two or more kinds of them. The polymer structure is not particularly limited, and the polymer can have an ether structure, such as polyethylene oxide.

In the lithium secondary cell, an electrolytic solution is housed in a cell container for a liquid system cell, a precursor liquid having a polymer dissolved in an electrolytic solution is housed therein for a gel system, or a polymer before crosslinking having an electrolytic salt dissolved therein is housed therein for a solid electrolyte system cell.

The separator can be any separator that is ordinarily used in a lithium secondary cell, such as a porous resin formed of polyethylene, polypropylene, polyolefin, polytetrafluoroethylene or the like, ceramics and nonwoven fabric. The separator can be a dry or plasticized polymer having an ether structure, such as polyethylene oxide for lithium metal polymer batteries.

The batteries tested can be of the "button" type assembled and sealed in a glovebox. For example, such batteries can include a carbon-treated sheet of aluminum carrying a coating including a cathode material (e.g., C-LiFePO₄, with a loading of 4.5 mg/cm²), a film containing the herein described anode material (including the silicon or silicon alloy nanosize particles), and a separator having a thickness of 25 µm (supplied by Celgard) impregnated with a **1M** solution of LiPF₆ in an EC/DEC 3/7 mixture. Other variants of test batteries can be envisioned by the person of skill in view of the herein teachings and as such, for conciseness sake, will not be further described here.

The batteries can be tested in with intensiostatic cycling as per procedures known in the art. For example, one can test the batteries at 25°C and a rate of C/12, first in oxydation from the rest potential up to 4 V and then in reduction between 4 V and 2.2 V, following charge/discharge cycles in a range of 2.2 and 4 V. Alternatively or additionally, one can test at a temperature of 45°C and a rate of C/8, and/or at a temperature of 60°C and a rate of C/8.

### Definitions

Unless otherwise defined, all technical and scientific terms used herein have the same meaning as commonly understood by a person of ordinary skill in the art to which the present invention pertains. As used herein, and unless stated otherwise or required otherwise by context, each of the following terms shall have the definition set forth below.

As used herein, the term "powder particle" generally relates to particulate matter, including but not limited to micron sized and nanosize particles.

As used herein, the term "plasma" generally relates to a gas in a hot, partially ionized state.

As used herein, the term "plasma torch" generally relates to a device capable of turning a gas into plasma.

As used herein, the term "inductively coupled plasma torch" generally relates to a type of plasma torch using electric current as an energy source to produce electromagnetic induction of the energy into the plasma.

As used herein, the term "injection probe" generally relates to an elongated conduit for insertion or supply of a feed material. In some embodiments, such injection probes can be cooled using a cooling fluid.

### EXAMPLES

The following examples describe some exemplary modes of making and practicing certain compositions that are described herein. It should be understood that these examples are for illustrative purposes only and are not meant to limit the scope of the compositions and methods described herein.

### Example 1

In this example, standard operating conditions for obtaining silicon nanoparticles through silane decomposition are described.

The standard operating conditions include plasma torch operating condition, silane injection method, hot-gas flow rate and temperatures, quench gas flow distribution in the reactor, and the operating pressure in the system. Table 1 includes the operating conditions used in acquiring the experimental data, namely plasma power 77-80 kW, plasma central gas flow 30 liters per minute (lpm) Argon, plasma sheath gas flow 95 lpm Argon and 15 lpm H₂, silane was injected underneath the PN-50 plasma torch using 3 SG1270 probes (120° spaced with downward injection angle of 15-20°). The gases introduced into the reactor are divided into 2 types: 250 lpm fresh N₂ in the fishtail module; 8500 lpm recycled mixture gas of (Ar+H₂+N₂) in various locations in the reactor, among which 1500 lpm was heated up to 500°C prior to injection to the top reaction zone. The reactor pressure was kept at 14.5 psia.

**Table 1**

| **Standard operating conditions** | | | | | | | | | | | | | | | | | |
|---|---|---|---|---|---|---|---|---|---|---|---|---|---|---|---|---|---|
| Plasma power, kW | Central gas Ar lpm | Sheath gas | | Silane injection probe | Reactor pressure, psia | Recycled gas flow | | | | | | | | | | | Q9/ Fresh N₂, lpm |
| | | Ar, lpm | H₂, lpm | | | Hot gas, ⁰C | Q1/ Hot flow, lpm | Q2/ FT1, lpm | Q3/ FT2, lpm | Q4/ PW1+ PW2, lpm | Q5/ Plate, lpm | Q6/ HT, lpm | Q7/ F-cone, lpm | Q8/ SAS, lpm | Total, lpm | Rec. gas pressure, psia | |
| 77-80 | 30 | 95 | 15 | 3x SG1270 | 14,5 | 500 | 1500 | 800 | 1100 | 1800 | 1550 | 1050 | 700 | 0 | 8500 | 19,5 | 250 |
| | | | | | | | | | | | | | | | | | |

### Example 2

In this example, alternate operating conditions for obtaining silicon nanoparticles through silane decomposition and nanoparticles obtained therefrom are described.

Table 2 lists some test runs conducted using alternate operating conditions and the analytical results of the powders obtained. The alternate operating conditions were one or more of the following: the total silane injection rate, flow rate of the dilution argon, quench gas flows in the top fishtail modules, and the passivation oxygen flow rate.

Powders were collected from the filter bottom (FB) and reactor wall and bottom (RWB) respectively. The production rates were evaluated based on the powder collected from the filter bottom, and the yield was calculated based on the production rate versus the feed rate (assuming full conversion of SiH₄ to Si).

The nanoparticles powders were analysed by BET, Malvern PSD, XRD, FE-SEM, LECO O%, C%, N%, H%, and ICP-MS. The mean particle sizes were evaluated based on the BET specific surface area, while the crystallite sizes were calculated using the Sherrer equation.

**Table 2**

| Test No. | Operating conditions | | | | | Powder collection | | | | Analyses | | | | | |
|---|---|---|---|---|---|---|---|---|---|---|---|---|---|---|---|
| | Silane feed rate, lpm | Diluti on Ar, lpm | Quench FT1/FT2, lpm | On-line O₂, lpm | Feed time, min | FB, g | RWB, g | Prod rate, kg/hrₗ | Yield wt% | d_{BET}, nm | O, wt% | N/H, wt% | C, ppm | d_{cry}, nm | Si Purity, wt% |
| 1 | 30 | 50 | 300/640 | 0,0 | 60 | 935 | neglib | 0,935 | 41,6 | 212 | 0,20 | na/ 0,020 | 660 | 42,0 | 99,98 |
| 2 | 50 | 150 | 300/640 | 1,1 | 25 | 1378 | neglib | 3,306 | 88,2 | 113 | 1,10 | na/ 0,018 | 160 | 36,1 | 99.99 |
| 3 | 50 | 150 | 815/1100 | 1,1 | 43 | 2613 | na | 3,648 | 97.2 | 109 | 1,20 | 0,550/ 0,020 | 300 | 35,9 | 99,99 |
| 4 | 40 | 150 | 815/1100 | 1,1 | 60 | 2410 | na | 2,410 | 80,3 | 60 | 2,30 | na/ 0,080 | na | 29,6 | na |
| 5 | 30 | 150 | 815/1100 | 0,65 | 60 | 1875 | na | 1,875 | 83,3 | 52 | 2,10 | 0,360/ 0,038 | 290 | 24,5 | na |
| 6 | 45 | 150 | 815/1100 | 0,95 | 120 | 4660 | na | 2,330 | 69,0 | 83 | 1,80 | 0,750/ 0,055 | 260 | 33,0 | na |

The results of these tests show that nano-sized silicon powders of mean particle sizes ranging from 52 to 212 nm can be produced. The production rates varied from around 1 kg/hr to 3.65 kg/hr while the collection yields varied from 41.6 to 97.2 wt%. Oxygen contents and other additives or impurities can be controlled according to the operating conditions. The powders produced are largely spherical or near spherical and have a crystallite size ranging from 24 to 42 nm.

### Example 3

In this example, silicon nanoparticles were obtained through silane decomposition using an embodiment of the apparatus and method described herein.

Table 3 below lists three Si powders with distinct particle sizes. The powders with the mean particle sizes of 212, 113, and 52 nm were produced with the silane injection concentrations of 37.5, 25, and 16.67%, respectively.

**Table 3**

| **Powder type** | **BET (m²/g)** | **D_{P} (nm)** | **O%** | **C%** | **N%** | **H%** | **dCry (nm)** |
|---|---|---|---|---|---|---|---|
| Si-N100N | 12.14 | 212 | 0.20 | 0.066 | 1.200 | 0.020 | ns |
| Si-N100N | 23,25 | 113 | 1.20 | 0.030 | 0.550 | 0.020 | 35.94 |
| Si-N100N | 49,4 | 52 | 2.10 | 0.029 | 0.360 | 0.038 | 24.5 |

### Example 4

In this example, silicon nanoparticles were obtained through silane decomposition using an embodiment of the apparatus and method described herein and compared with silicon nanoparticles (comparative) obtained with an apparatus and method of the prior art that uses micro silicon powder as precursor.

Table 4 is a comparison between the nano-Si powders produced using micro silicon powder as precursor vs. using silane as the precursor.

**Table 4**

| | **Synthesized from micro-size Si particles** | | | | **Synthesized from SiH₄ gas** | | | |
|---|---|---|---|---|---|---|---|---|
| Powder type | Si-N100N | | | | Si-N100N | | | |
| BET, m²/g | 32.38 | | | | 31.04 | | | |
| d_{P}, nm | 80 | | | | 83 | | | |
| O% | 1.35 | | | | 1.80 | | | |
| N% | 4.00 (normally >3.5) | | | | 0.75 (normally <1.3) | | | |
| PSD by volume (nm) | D10 | D50 | D90 | D95 | D10 | D50 | D90 | D95 |
| | 127 | 255 | 726 | 4520 | 85 | 259 | 570 | 666 |
| PSD by number (nm) | D10 | D50 | D90 | D95 | D10 | D50 | D90 | D95 |
| | 76 | 120 | 214 | 259 | 36 | 59 | 121 | 157 |
| Particles >300 nm | >4% by number, and >40% by volume/weight | | | | <1.5% by number, and <30% by volume/weight | | | |
| Particles >1 µm | 100-500 ppm by number | | | | <0.5 ppm by number | | | |
| Particles >10 µm | 0.1-0.5 ppm by number | | | | Absence | | | |
| Thickness of oxide layer, nm | 0.3 - 1.0 | | | | 0.3 - 1.0 | | | |
| Thickness of nitride, nm (If doped with nitrogen source) | 0.75 - 2.0 | | | | 0.06 - 2.0 (normally <0.5) | | | |
| Purity, Si | 99.94% | | | | 99.998% | | | |

The comparative powder and the powder in accordance with an embodiment of the present disclosure look generally similar to each other. However, important differences are found in the particle size distribution and purity level. Comparative powders produced from micro silicon have broad size distributions with the inclusion of micro-sized particles in the nanopowder products. These micro-sized particles were from incomplete evaporation in the plasma process and carried over to the powder collector as contaminants. In the nano-Si powders produced from silane precursor, those micro-sized particles were absent. Finally, the purity level of the product powder was directly related to the purity of the precursor. Since the silane was much purer than the micro-sized silicon powders, the nano-Si produced from silane was purer as well.

### Example 5

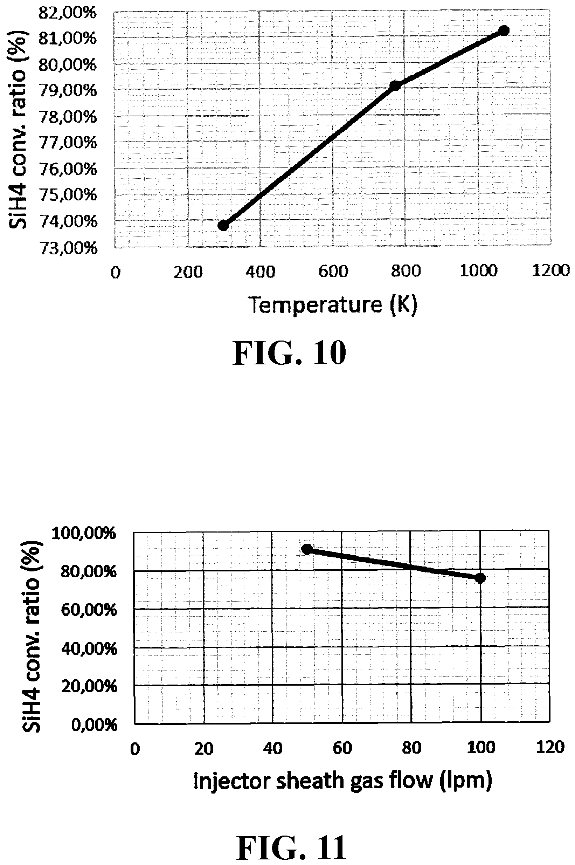

Figs. 10 through 13 are simulation results.

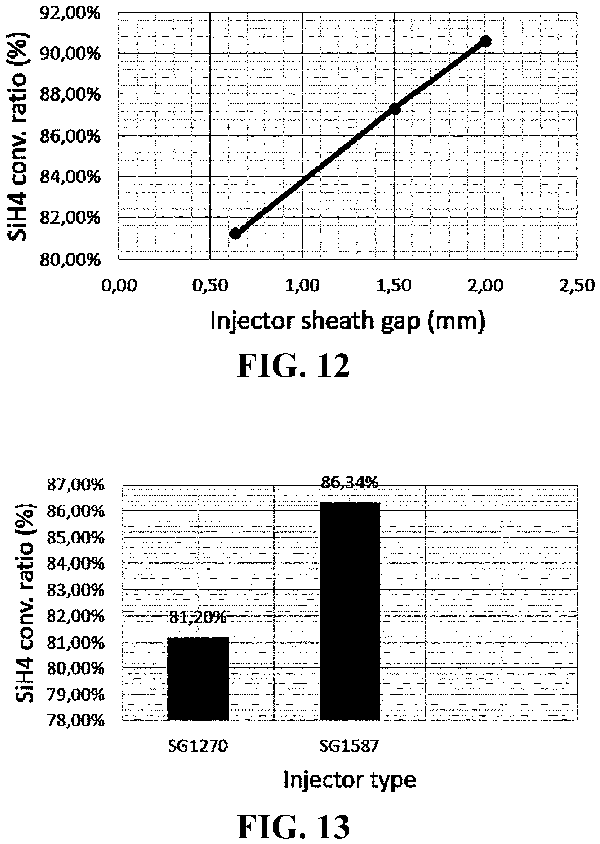

Fig. 10 shows a positive effect of dynamic hot wall gas temperatures (in K) on conversion rate of silane (in %). Fig. 11 shows a graph of the effect of injector sheath gas flow on conversion rate of silane (in %). Fig. 12 shows a positive relationship between injector sheath gap (in mm) on conversion rate of silane (in %). Fig. 13 shows the effect of two injector types on conversion rate of silane (in %).

### Example 6

Different tests were run to investigate the effect of different gas volumes in the system. Table 1 shows the standard operating parameters and Table 2 shows the alternate operating parameters for the test along with some associated data measured on the powders. The parameters of interest were the silane feed-rate, the silane dilution gas volume and the quench volumes. The silane feed-rate simply corresponds to the volume flow of silane injected into the apparatus.

The dilution gas is channeled in the apparatus through the silane injection probe. It is represented as flow 201, in the gap space 209 as shown in Fig. 5. Silane and dilution gases are injected in the three-probe configuration. The probe position is shown by element 130 in Fig. 1, in the three-probe configuration the probes are distributed with a threefold rotational symmetry around the reactor axis (i.e., 120°). The cooling gas (quench gas) is injected immediately after the hot section in two separate sections, FT1 being upstream from FT2. Both sections are comprised in region 503 of the configuration shown in Fig. 8. All other gas flows are shown in Table 1.

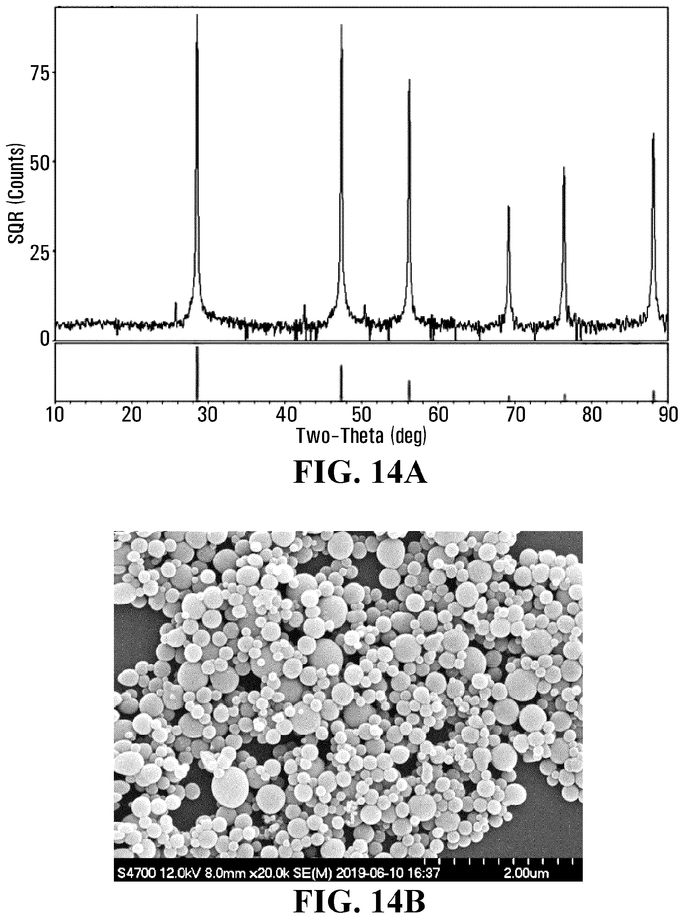

Fig. 14A illustrates an XRD peak graphic of a first powder (BET=12.14 m²/g) (dP=212 nm) (O%=0.20) (C%=0.066) (N%=1.200) (H%=0.020). Fig. 14B shows an SEM image of the powder of Fig. 14A. The powder was synthesized using the conditions shown in Table 2, test #1. The condition corresponds to a low silane feed-rate, low dilution, low quench condition. The crystallite size obtained from the XRD profile is 42 nm and the diameter obtained from BET is 212 nm.

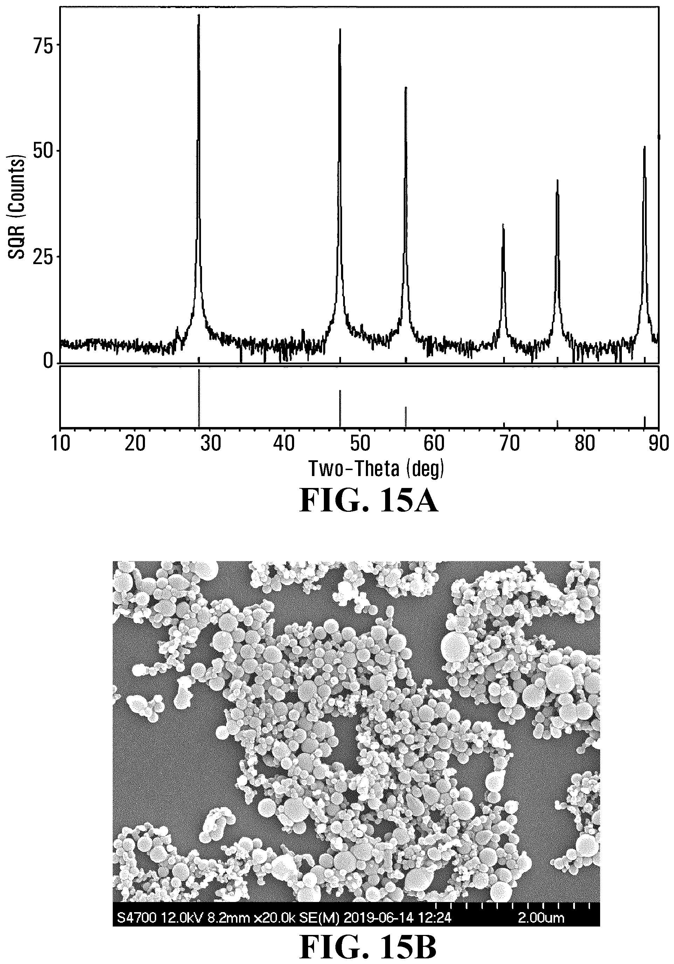

Fig. 15A illustrates an XRD peak graphic of a second powder (BET=23.25 m²/g) (dP=111 nm) (O%=1.20) (C%=0.030) (N%=0.550) (H%=0.020). Fig. 15B shows an SEM image of the powder of Fig. 15A. The powder was synthesized using the conditions shown in Table 2, test #3. The condition corresponds to a high silane feed-rate, high dilution, high quench condition. The crystallite size obtained from the XRD profile is 35.9 nm and the diameter obtained from BET is 109 nm.

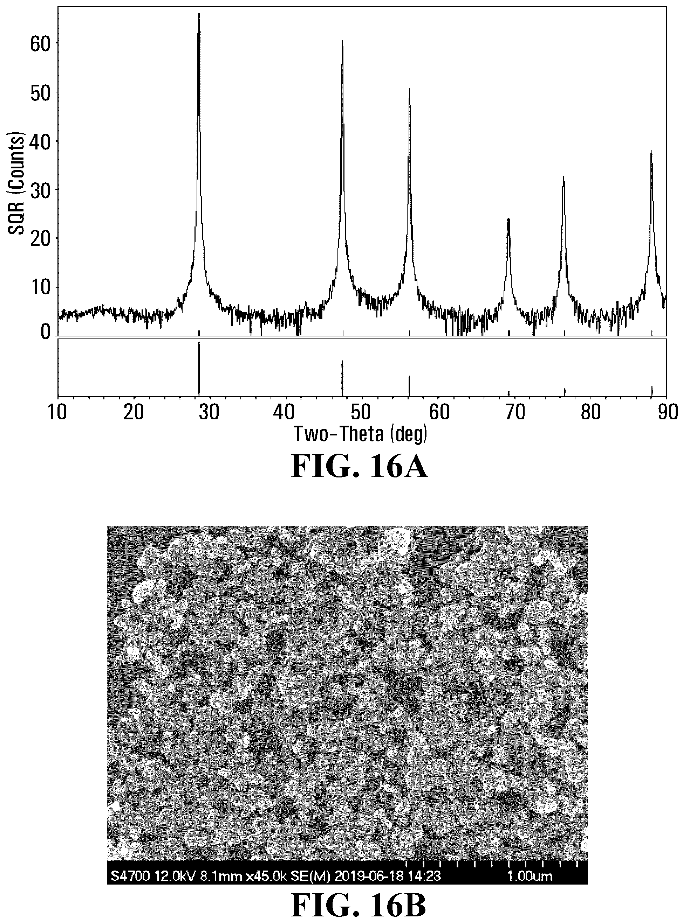

Fig. 16A illustrates an XRD peak graphic of a third powder (BET=49.4 m²/g) (dP=52 nm) (O%=2.10) (C%=0.029) (N%=0.360) (H%=0.038). Fig. 16B shows an SEM image of the powder of Fig. 16A. The powder was synthesized using the conditions shown in Table 2, test #5. The condition corresponds to a low silane feed-rate, high dilution, high quench condition. The crystallite size obtained from the XRD profile is 24.5 nm and the diameter obtained from BET is 52 nm.

It appears that a higher quench volume, a higher dilution volume and a lower federate all contribute to yield smaller particle sizes. This can be attributed to the inhibition of the nucleation and growth dynamics and the suppression of coagulation through the dilution of the precipitating species.

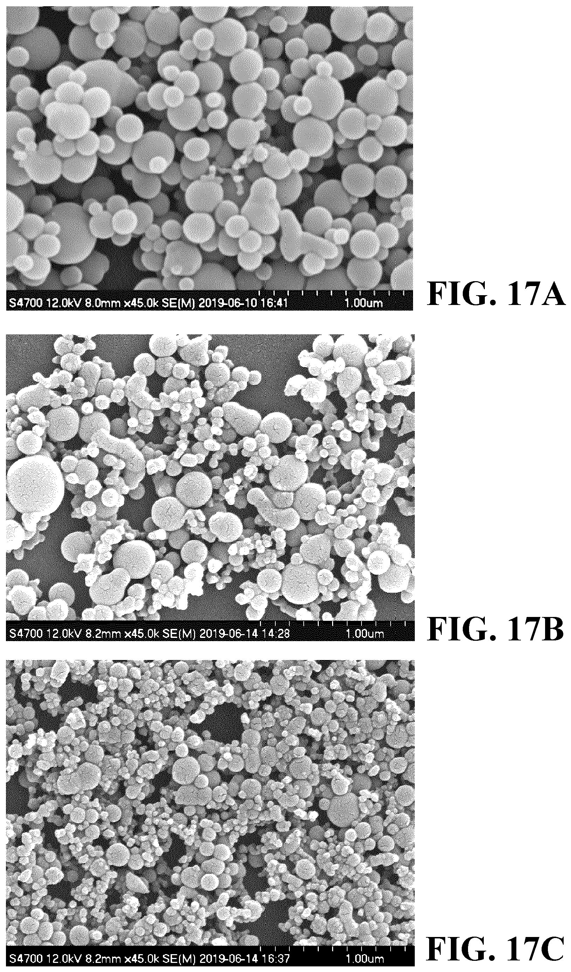

Figs. 17A, 17B and 17C each show an SEM image of a silicon powder made from silane as precursor material. They provide a comparative view of the size of particles synthesized with the conditions of tests #1, 3 and 5 of table 2, respectively, with all other parameters according to table 1.

### Example 7

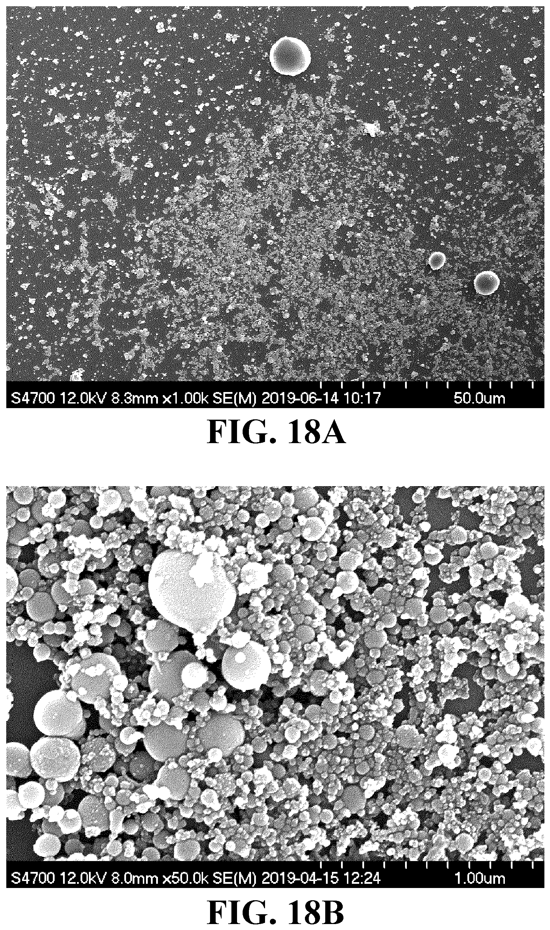

Fig. 18 through Fig. 23 illustrate a comparison between powders synthesized from a solid feedstock as per prior art process and apparatus ("comparative powder") and powders synthesized with the apparatus and method described herein.

The powder in accordance to the present disclosure was synthesized according to test #6 conditions in Table 2 with all other parameters set according to Table 1. The comparative powder was synthesized in an induction plasma system according to the process described in US 8,013,269. The silicon powder feed-rate was of 4.5 g/min and the plasma power was 45 kW. The gases used in the torch were 90 slpm Ar and 10 slpm H₂.

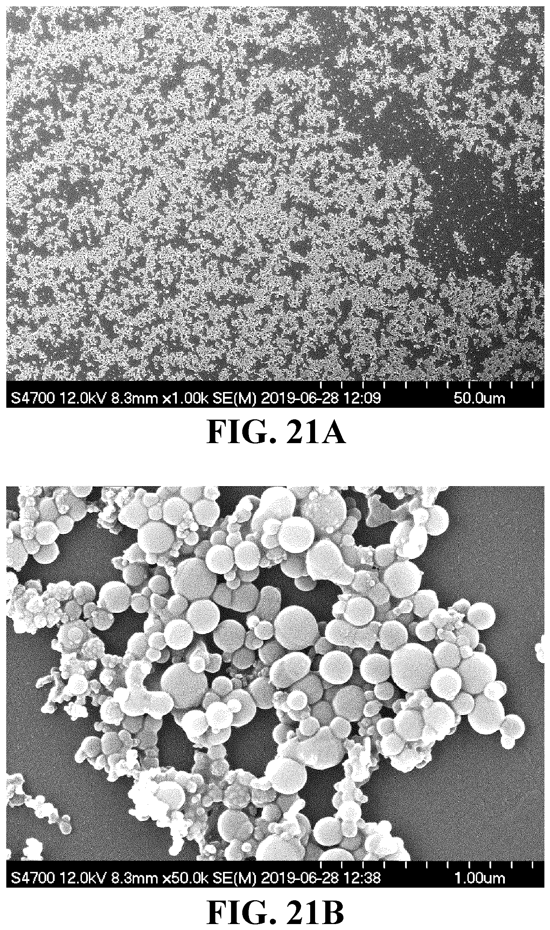

Fig. 18A and Fig. 18B show the prior art equivalent of Fig. 21A and Fig. 21B.

Figs. 18A and 18B each show a SEM image of a comparative silicon powder (BET=32.38 m²/g) (d_{P} =80 nm) (O%=1.35) (N%=4.00) made with a prior art plasma torch process using micron size silicon solid precursor material. Figs. 21A and 21B each show an SEM image of a silicon powder (BET=31.04 m²/g) (d_{P}= 83 nm) (O%=1.80) (N%=0.75) made from silane as precursor material.

One will notice the absence of large particles in Fig. 21A. Conversely, large particles are visible in Fig. 18A which are attributable to the incomplete vaporization of the solid feedstock used in the prior art process. The trained observer will also acknowledge the wider size distribution displayed in Fig. 18B when compared to Fig. 21B, that is, the particle size distribution is wider in the comparative powder.

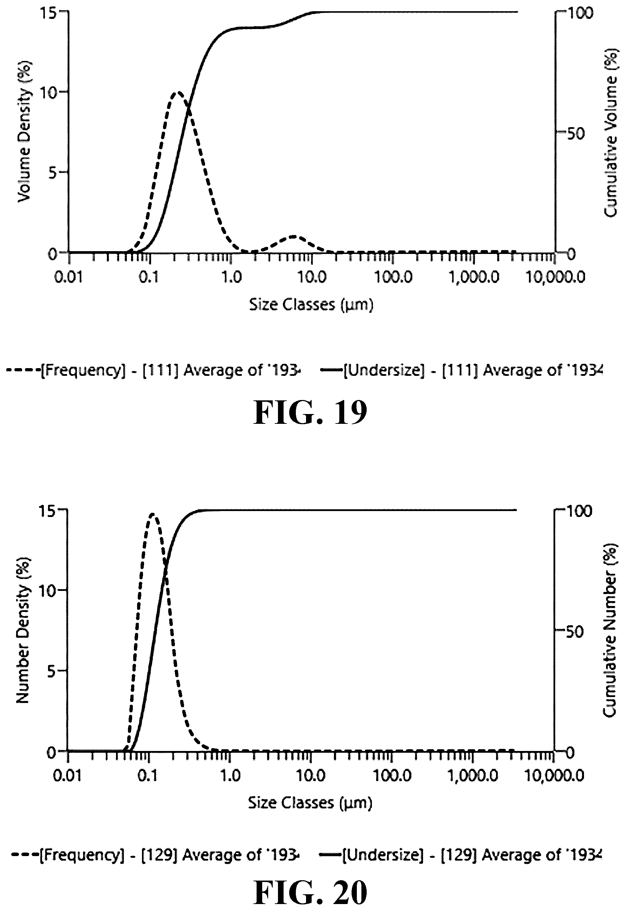

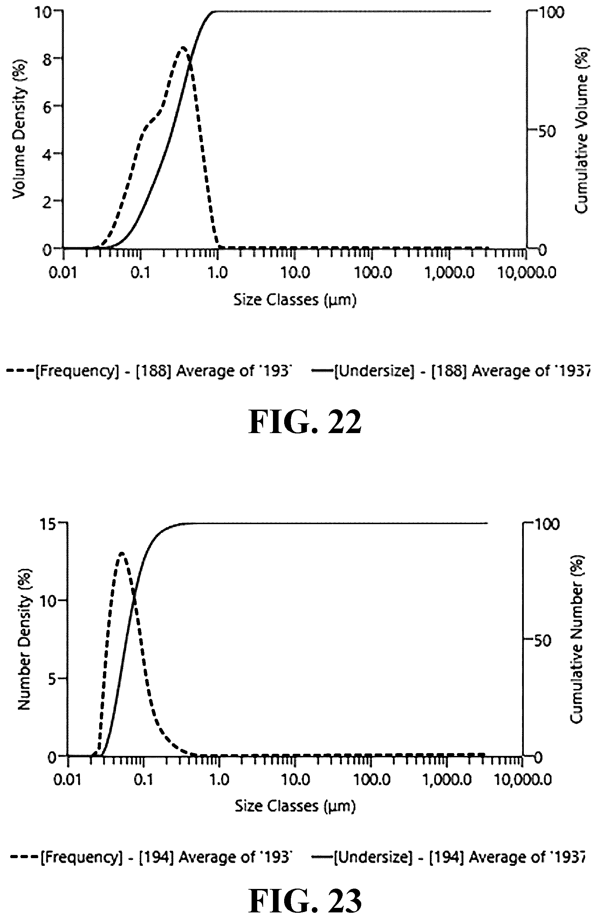

Fig. 20 shows a graph of a PSD (size classes in µm) by number density (%) of the comparative powder of Figs 18A and 18B. Fig. 23 shows a graph of a PSD (size classes in µm) by number density (%) of the powder of Figs. 21A and 22B. Fig. 20 displays a wider distribution than Fig. 23, and the distribution is centered (D₅₀) around larger particles (> 120 nm), as expected. Fig. 19 shows a graph of PSD (size classes in µm) by volume density (%) of the comparative powder of Figs. 18A and 18B. Fig. 22 shows a graph of PSD (size classes in µm) by volume density (%) of the powder of Figs. 21A and 21B.

The volume distribution for the comparative powders shows a primary and secondary distribution, the latter of which is attributable to the non-vaporized feedstock, consistent with the observations noted earlier. This secondary distribution is not seen in the number distribution, which highlights the disproportionate impact that large particles may have in applications such as energy storage, where mass and volume enter the calculations of energy densities.

### Example 8

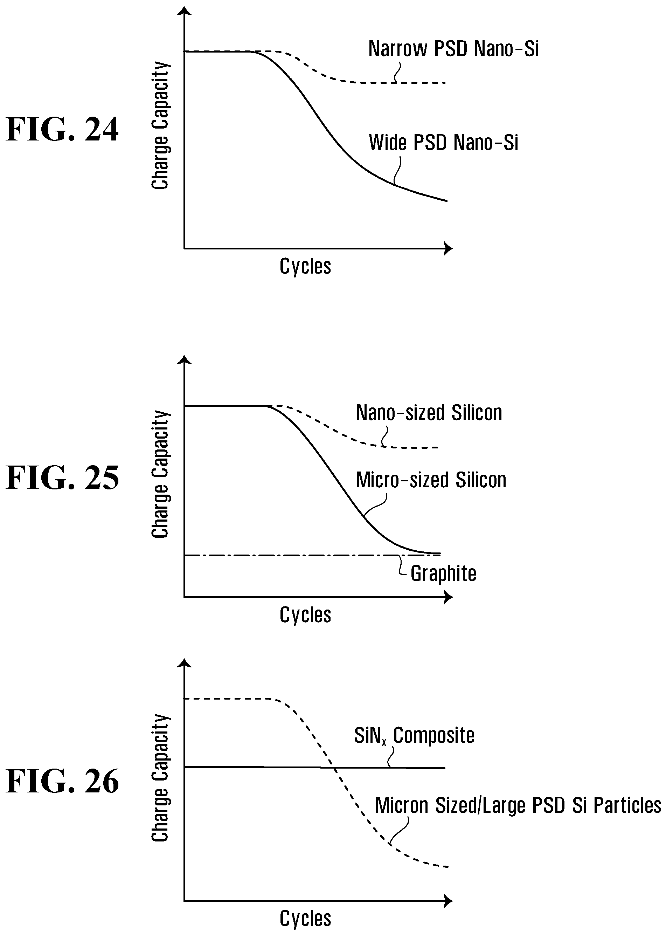

Fig. 24 through Fig. 26 illustrate comparative charge capacity behavior of a lithium rechargeable cell including in the anode material, nanoparticles of the present disclosure or comparative nanoparticles obtained with the prior art process that uses solid feedstock material.

Fig. 24 illustrates comparative charge capacity behavior of a lithium rechargeable cell including Si nanoparticle powder in the anode material having a narrow particle size distributions (PSD) compared to a wide PSD. A wide PSD means that a significant portion of the sample will have a diameter size over the critical 150 nm cut-off. As discussed, these larger particles will progressively be disconnected from the anode as swelling and disintegration occurs, which is illustrated in the decreasing charge capacity

Fig. 25 illustrates comparative charge capacity behavior of a lithium rechargeable cell including a Si nanoparticle/graphite composite anode to a Si microparticle/graphite composite anode of same composition. As particles larger than the 150 nm cut-off disintegrate and are disconnected from the anode, the capacity gradually tends towards that of a cell with a graphite anode. More capacity remains where the particles are nano-sized. Those well versed in the art will recognize that the trend for micron sized particles should tend towards a value lower than that for a pure graphite anode if all silicon is to be disconnected, the effect of which we omitted here for simplicity.

Fig. 26 illustrates comparative charge capacity behavior of a lithium rechargeable cell including SiNₓ composite nanoparticle powder in the anode material, compared to Si micron size powder having a large PSD. The initially uniform SiNₓ composite nanoparticles convert into a biphasic material upon lithiation where N-rich zones separate pure Si zones. This morphology change allows for the expansion of the silicon while conserving the integrity of the particle and therefore the connection to the anode. Fig. 26 shows the initial capacity of the SiNₓ composite to be lower than that of pure silicon particles, as the composite has a lower degree of lithiation. The charge capacity is however conserved over charge discharge cycles whereas micro-sized particles disintegrate and stop participating to the cell capacity. Therefore, the curve for the SiNₓ composite shows a constant value whereas the curve for the micro-sized Si particles show a decaying value.

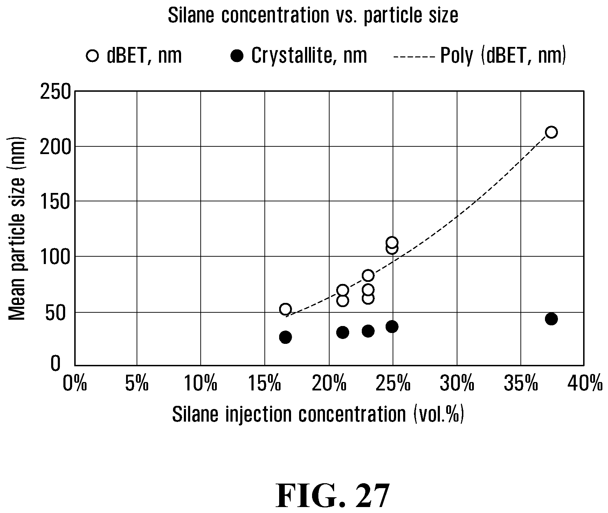

Fig. 27 shows a graphical illustration of the results reported in one or more of the tables disclosed in the present specification and illustrates the effect of silane concentration on mean particle size of the nanoparticles obtained.

The technology disclosed herein enables the mass production of new cell components which are shown to improve the performance of the cell in both storage and charge/discharge characteristics. As such, it is positioned favorably to provide a competitive advantage to the players in "cell components" segment of the value chain for the industry.

The technology provides an improvement of performance simultaneously with a solution for mass production at reasonable costs. This fits into the evolution of both cost and performance of lithium ion cells, as one has evolved opposite to the other in recent years.

Note that titles or subtitles may be used throughout the present disclosure for convenience of a reader, but in no way these should limit the scope of the invention. Moreover, certain theories may be proposed and disclosed herein; however, in no way they, whether they are right or wrong, should limit the scope of the invention so long as the invention is practiced according to the present disclosure without regard for any particular theory or scheme of action.

It will be understood by those of skill in the art that throughout the present specification, the term "a" used before a term encompasses embodiments containing one or more to what the term refers. It will also be understood by those of skill in the art that throughout the present specification, the term "comprising", which is synonymous with "including," "containing," or "characterized by," is inclusive or open-ended and does not exclude additional, un-recited elements or method steps.

Unless otherwise defined, all technical and scientific terms used herein have the same meaning as commonly understood by one of ordinary skill in the art to which this invention pertains. In the case of conflict, the present document, including definitions will control.

As used in the present disclosure, the terms "around", "about" or "approximately" shall generally mean within the error margin generally accepted in the art. Hence, numerical quantities given herein generally include such error margin such that the terms "around", "about" or "approximately" can be inferred if not expressly stated.

Although various embodiments of the disclosure have been described and illustrated, it will be apparent to those skilled in the art in light of the present description that numerous modifications and variations can be made without departing from the extent of the invention which shall be determined by the appended claims.

## Claims

1. Method for producing nanoparticles, comprising:
- feeding a precursor material (130) in fluid form toward a reaction zone along a feed path, the reaction zone (134) being in a reaction chamber (140), the reaction chamber having a longitudinal axis,
- generating a plasma (112) in the reaction zone (134), the plasma contacting the precursor material (130) to produce a reactant gaseous mixture, and
- cooling the reactant gaseous mixture in a cooling zone (132) to cause nucleation and produce the nanoparticles,
**characterised by** injecting a pre-heated gas (302) to generate a radial pre-heated gas flow (304) in the reaction chamber (140) along at least a portion of the longitudinal axis.

2. The method of claim 1, wherein a feeding mechanism comprising an elongated structure feeds the precursor material (130) in fluid form toward the reaction (134), the elongated structure defining a channel for receiving the precursor material.

3. The method of claim 2, wherein the feeding mechanism comprises a plurality of elongated structures placed sequentially along the longitudinal axis or around the longitudinal axis.

4. The method of claim 2 or 3, wherein the feeding mechanism further feeds a carrier gas into the reaction zone (134).

5. The method of claim 4, wherein the carrier gas is mixed with the precursor material (130) prior to, concomitantly with, or after its injection in the reaction zone (134).

6. The method of claim 4 or 5, the feeding mechanism being configured to adjust a relative flow rate of the carrier gas to control a concentration of the precursor material (130) in the reaction zone (134).

7. The method of any one of claims 2 to 6, wherein the reactant gaseous mixture comprises dissociated or chemically transformed forms of the precursor material (130).

8. The method of any one claim 2 or 3, wherein the feeding mechanism further feeds an additive gas or doping agent into the reaction zone (134), cooling zone (132), or both.

9. The method of any one of claims 2 to 8, further comprising generating a plasma jet in the reaction zone (134) impinging upon the precursor material (130) at a convergence point between streamlines of the plasma jet and the feed path to produce the reactant gaseous mixture, the plasma jet streamlines being at an angle with respect to the feed path.

10. The method of claim 9, wherein the angle of the plasma jet streamlines with respect to the feed path angle is of between about 10° and about 80°, preferably of between 10° and about 60°, more preferably of between about 10° and about 30°, even more preferably of between about 15° and about 20°.

11. The method of any one of claims 1 to 10, wherein the gas generating the radial gas flow (304) has a temperature sufficient to extend the reaction zone (134) to a zone downstream therefrom causing precursor material (130) present downstream from the reaction zone (134) to produce an additional volume of the reactant gaseous mixture.

12. The method of any one of claims 1 to 11, wherein the radial gas flow (304) prevents reactive species in the gaseous mixture from reaching an internal wall of the reaction chamber (140).

13. The method of any one of claims 1 to 12, further comprising adjusting a relative flow rate of the gas generating the radial gas flow (304) to control dilution of nascent seeds of the nanoparticles.

14. The method of any one of claims 1 to 13, wherein the precursor material (130) comprises silane, trichlorosilane, or silicon tetrachloride.

## Patentansprüche

1. Verfahren zum Herstellen von Nanopartikeln, umfassend:
- Zuführen eines Vorläufermaterials (130) in Fluidform zu einem Reaktionsbereich entlang eines Zuführwegs, wobei der Reaktionsbereich (134) in einer Reaktionskammer (140) ist und die Reaktionskammer eine Längsachse aufweist,
- Erzeugen eines Plasmas (112) in dem Reaktionsbereich (134), wobei das Plasma mit dem Vorläufermaterial (130) in Kontakt kommt, um ein gasförmiges Reaktantengemisch zu erzeugen,
- Abkühlen des gasförmigen Reaktantengemischs in einem Kühlbereich (132), um Keimbildung zu bewirken und die Nanopartikel herzustellen,
**dadurch gekennzeichnet, dass** ein vorgewärmtes Gas (302) eingespritzt wird, um einen radialen vorgewärmten Gasstrom (304) in der Reaktionskammer (140) entlang mindestens eines Abschnitts der Längsachse zu erzeugen.

2. Verfahren nach Anspruch 1, wobei ein Zufuhrmechanismus, umfassend eine längliche Struktur, das Vorläufermaterial (130) in Fluidform in Richtung der Reaktion (134) zuführt, wobei die längliche Struktur einen Kanal zum Aufnehmen des Vorläufermaterials definiert.

3. Verfahren nach Anspruch 2, wobei der Zufuhrmechanismus eine Vielzahl von länglichen Strukturen umfasst, die nacheinander entlang der Längsachse oder um die Längsachse platziert sind.

4. Verfahren nach Anspruch 2 oder 3, wobei der Zufuhrmechanismus ferner ein Trägergas in den Reaktionsbereich (134) zuführt.

5. Verfahren nach Anspruch 4, wobei das Trägergas vor, gleichzeitig mit oder nach seiner Injektion in den Reaktionsbereich (134) mit dem Vorläufermaterial (130) gemischt wird.

6. Verfahren nach Anspruch 4 oder 5, wobei der Zufuhrmechanismus konfiguriert ist, um eine relative Strömungsrate des Trägergases einzustellen, um eine Konzentration des Vorläufermaterials (130) in dem Reaktionsbereich (134) zu steuern.

7. Verfahren nach einem der Ansprüche 2 bis 6, wobei das gasförmige Reaktantengemisch dissoziierte oder chemisch transformierte Formen des Vorläufermaterials (130) umfasst.

8. Verfahren nach einem der Ansprüche 2 oder 3, wobei der Zufuhrmechanismus ferner ein Zusatzgas oder ein Dotiermittel in die Reaktionsbereich (134), die Kühlzone (132) oder beide zuführt.

9. Verfahren nach einem der Ansprüche 2 bis 8, ferner umfassend ein Erzeugen eines Plasmastrahls in dem Reaktionsbereich (134), der an einem Konvergenzpunkt zwischen Stromlinien des Plasmastrahls und dem Zufuhrweg auf das Vorläufermaterial (130) auftrifft, um das Reaktionsgasgemisch herzustellen, wobei die Stromlinien des Plasmastrahls in einem Winkel in Bezug auf den Zufuhrweg sind.

10. Verfahren nach Anspruch 9, wobei der Winkel der Stromlinien des Plasmastrahls in Bezug auf den Zufuhrwegwinkel zwischen etwa 10° und etwa 80°, vorzugsweise zwischen 10° und etwa 60°, bevorzugter zwischen etwa 10° und etwa 30° und noch bevorzugter zwischen etwa 15° und etwa 20° liegt.

11. Verfahren nach einem der Ansprüche 1 bis 10, wobei das Gas, das den radialen Gasstrom (304) erzeugt, eine Temperatur aufweist, die ausreichend ist, um den Reaktionsbereich (134) auf einen stromabwärtigen Bereich davon auszudehnen, was bewirkt, dass Vorläufermaterial (130), das stromabwärts von dem Reaktionsbereich (134) vorhanden ist, ein zusätzliches Volumen des gasförmigen Reaktantengemischs erzeugt.

12. Verfahren nach einem der Ansprüche 1 bis 11, wobei der radiale Gasstrom (304) verhindert, dass reaktive Spezies in dem gasförmigen Gemisch eine Innenwand der Reaktionskammer (140) erreichen.

13. Verfahren nach einem der Ansprüche 1 bis 12, ferner umfassend ein Einstellen einer relativen Strömungsgeschwindigkeit des Gases, das den radialen Gasstrom (304) erzeugt, um eine Verdünnung der entstehenden Keime der Nanopartikel zu kontrollieren.

14. Verfahren nach einem der Ansprüche 1 bis 13, wobei das Vorläufermaterial (130) Silan, Trichlorsilan oder Siliciumtetrachlorid umfasst.

## Revendications

1. Procédé de production de nanoparticules, comprenant :
- l'acheminement d'un matériau précurseur (130) sous forme de fluide vers une zone de réaction le long d'un trajet d'alimentation, la zone de réaction (134) se trouvant dans une chambre de réaction (140), la chambre de réaction ayant un axe longitudinal,
- la génération d'un plasma (112)
dans la zone de réaction (134), le plasma entrant en contact avec le matériau précurseur (130) pour produire un mélange gazeux réactif,
- le refroidissement du mélange gazeux réactif dans une zone de refroidissement (132) afin de provoquer la nucléation et
produire les nanoparticules, **caractérisé par** l'injection d'un gaz préchauffé (302) pour générer un flux radial de gaz préchauffé (304) dans la chambre de réaction (140) le long d'au moins une partie de l'axe longitudinal.

2. Procédé selon la revendication 1, dans lequel un mécanisme d'alimentation comprenant une structure allongée achemine le matériau précurseur (130) sous forme de fluide vers la réaction (134), la structure allongée définissant un canal de réception du matériau précurseur.

3. Procédé selon la revendication 2, dans lequel le mécanisme d'alimentation comprend une pluralité de structures allongées placées successivement le long de l'axe longitudinal ou autour de l'axe longitudinal.

4. Procédé selon la revendication 2 ou 3, dans lequel le mécanisme d'alimentation achemine en outre un gaz porteur dans la zone de réaction (134).

5. Procédé selon la revendication 4, dans lequel le gaz porteur est mélangé au matériau précurseur (130) avant, concomitamment à, ou après, son injection dans la zone de réaction (134).

6. Procédé selon la revendication 4 ou 5, le mécanisme d'alimentation étant configuré pour ajuster un débit relatif du gaz porteur afin de contrôler une concentration du matériau précurseur (130) dans la zone de réaction (134).

7. Procédé selon l'une quelconque des revendications 2 à 6, dans lequel le mélange gazeux réactif comprend des formes dissociées ou chimiquement transformées du matériau précurseur (130).

8. Procédé selon l'une quelconque des revendications 2 ou 3, dans lequel le mécanisme d'alimentation achemine en outre un gaz additif ou un agent dopant dans la zone de réaction (134), la zone de refroidissement (132), ou les deux.

9. Procédé selon l'une quelconque des revendications 2 à 8, comprenant en outre la génération d'un jet de plasma dans la zone de réaction (134) frappant le matériau précurseur (130) en un point de convergence entre les lignes d'écoulement du jet de plasma et le trajet d'alimentation pour produire le mélange gazeux réactif, les lignes d'écoulement du jet de plasma étant inclinées par rapport au trajet d'alimentation.

10. Procédé selon la revendication 9, dans lequel l'angle des lignes d'écoulement du jet de plasma par rapport à l'angle du trajet d'alimentation est compris entre environ 10° et environ 80°, de préférence entre 10° et environ 60°, plus préférentiellement entre environ 10° et environ 30°, et encore plus préférentiellement entre environ 15° et environ 20°.

11. Procédé selon l'une quelconque des revendications 1 à 10, dans lequel le gaz générant le flux radial de gaz (304) présente une température suffisante pour étendre la zone de réaction (134) à une zone en aval de celle-ci, amenant le matériau précurseur (130) présent en aval de la zone de réaction (134) à produire un volume supplémentaire du mélange gazeux réactif.

12. Procédé selon l'une quelconque des revendications 1 à 11, dans lequel le flux radial de gaz (304) empêche les espèces réactives dans le mélange gazeux d'atteindre une paroi interne de la chambre de réaction (140).

13. Procédé selon l'une quelconque des revendications 1 à 12, comprenant en outre l'ajustement d'un débit relatif du gaz générant le flux radial de gaz (304) pour contrôler la dilution des grains naissants des nanoparticules.

14. Procédé selon l'une quelconque des revendications 1 à 13, dans lequel le matériau précurseur (130) comprend du silane, du trichlorosilane ou du tétrachlorure de silicium.
